# EUROPÄISCHE PATENTSCHRIFT

(11) **EP 0 652 628 B1**
(45) Veröffentlichungstag und Bekanntmachung des Hinweises auf die Patenterteilung: **20.03.1996**
(21) Anmeldenummer: 94116299.2
(22) Anmeldetag: 14.10.1994
(51) Int. Cl.: H02K 15/085, H02K 3/50

(54) **Verfahren zum maschinellen Bewickeln eines Stators für Elektromotoren und Drahtführer sowie Endscheibe hierfür**
Method for winding stators for electrical motors and wire guide and end plate therefor
Méthode pour enrouler les stators de moteurs électriques et guide-fil et flasque pour la mise en oeuvre de cette méthode

(30) Priorität: 05.11.1993 DE 4337870
(43) Veröffentlichungstag der Anmeldung: 10.05.1995
(73) Patentinhaber: RUOSS SPEZIALMASCHINEN, D-73272 Neidlingen (DE)
(72) Erfinder: Ruoss, Gerhard, Dipl.-Ing., D-73272 Neidlingen (DE)
(74) Vertreter: Hering, Hartmut, Dipl.-Ing.

(56) Entgegenhaltungen:
- CH-A- 444 950
- CH-A- 493 137
- DE-B- 1 203 870
- DE-B- 1 247 457
- FR-A- 1 153 754

## Beschreibung

Die Erfindung befaßt sich mit Verfahren zum maschinellen Bewickeln eines Stators für Elektromotoren und mit einem Drahtführer hierfür sowie mit Endscheiben zur Verwendung bei diesen Verfahren. Ein Stator umfaßt üblicherweise ein Statorpaket, welches in Umfangsrichtung in regelmäßigen Abständen mit Polen besetzt ist, und zwischen jeweils zwei benachbarten Polen eine zugeordnete Statornut gebildet wird. Ferner besitzt ein solcher Stator eine in der Mitte liegende, axiale Durchgangsbohrung, welche im allgemeinen als Statorbohrung bezeichnet wird.

Aus der eigenen DE-A-37 09 687 ist eine Wickelvorrichtung für auf einer Einspannstation festgelegte Statoren und/oder Anker von Elektromotoren als zu bewickelnde Teile bekannt. Mit Hilfe dieser Wickelvorrichtung läßt sich beispielsweise eine Wicklung, wie eine Polwicklung nur um einen einzigen Pol dadurch erstellen, daß man die Wickeldrahtverlegung in drei gesteuerten Achsen frei wählbar durchführt, wobei der aufgespannte Stator als y-Achse eine Drehbewegung um seine Achse ausführen kann, der Drahtführer, welcher dort von einem Wickel finger gebildet wird, welcher an einer Wickelnadel fest eingespannt gehalten ist, beispielsweise in eine zur Aufspannebene senkrechte Richtung, d.h. eine z-Achse, bewegbar ist, und eine dritte Bewegungsachse in einer zu der z-y-Ebene senkrechten Richtung, d.h. in eine x-Richtung, beispielsweise dadurch verwirklicht wird, daß die Aufspanneinrichtung mit dem dort aufgespannten Stator auf einer Tischanordnung translatorisch bewegbar ist. Mit Hilfe dieser aus DE-A-37 09 687 bekannten Wickelvorrichtung läßt sich somit dank der drei gesteuerten Bewegungsachsen eine Polwicklung mit der x-Achse als Verlegeachse in Form einer Lagenwicklung nur um einen einzigen Pol bis zum Nutgrund der Statornut auf zuverlässige Weise erstellen. Nachdem dann die Wicklung an dem zugeordneten Pol fertiggestellt ist, wird dann der Stator weitergeschaltet und es wird dann der in Drehrichtung nächste Pol bewickelt. Daher gestattet diese Wickelvorrichtung die Bewicklung eines Stators lediglich mit einem Wickelmuster mit dem Wickelschritt 1, d.h. jeweils in Umfangsrichtung benachbart liegenden Pol müssen in einzelnen Wickelschritten separat mit einer Wicklung versehen werden. Wenn man beispielsweise ein Wickeln des Stators mit einem Wickelmuster mit einem Wickelschritt von größer 1 (nachstehend abgekürzt mit >1) mit Hilfe dieser Wickelvorrichtung ausführen möchte, so ist dies nicht möglich, da beim Überspringen eines Pols oder einer benachbart liegenden Statornut diese zu überspringende Statornut im Querschnitt durch den Wickeldraht zugewickelt und verschlossen würde. Es besteht aber ein Bedürfnis nach einem Bewickeln eines Stators für Elektromotoren mit einem Wickelmuster, welches einen Wickelschritt >1 aufweist, d.h., daß wenigstens eine unmittelbar benachbarte Statornut beim Bewickeln des Stators übersprungen wird, oder der in Umfangsrichtung unmittelbar benachbart liegende Pol beim Bewickeln übersprungen werden soll.

Aus DE-B 12 47 457 ist eine Vorrichtung zum mechanischen Bewikkeln von genuteten Ständerblechpaketen elektrischer Maschinen bekannt. Hierbei sind angetriebene Wickelnadeln vorgesehen, deren abgewinkelter Endteil mit einer ein Nadelöhr bildenden Radialbohrung versehen ist. Diese Wickelnadeln sind an einem Träger um eine senkrecht zur Wickelnadel angeordnete Achse drehbar gelagert. Diese Wickelnadeln mit Nadelöhren greifen beim Hindurchführen durch die Ständerbohrung radial in die zu bewikkelnden Ständernuten bzw. Statornuten ein. An den jeweils axial gegenüberliegenden Enden des Ständerblechpakets können sich dann die Wickelnadeln in Richtung voneinander weg geringfügig in Richtung nach außen bewegen, um im Zusammenwirken mit Abstreifern den Wickeldraht vor der Bewicklung der nächsten Ständernut radial nach außen zu führen. Eine mehrachsige Bewegung der Wikkelnadeln ist dort weder beschrieben noch gezeigt.

In DE-B-12 03 870 ist eine Drahtverlegungsvorrichtung für eine Statorwickelmaschine beschrieben, bei der Drahtführungsglieder radial ein- und ausschwenkbar an einem als Drahtzuführung dienenden Drahtverlegungsrohr angeordnet sind. Diese radial ein- und ausschwenkbaren, doppelarmigen Drahtführungsglieder sind nur um eine feste Achse schwenkbar, aber nicht in gesteuerter Weise in wenigstens zwei Bewegungsfreiheitsgraden oder Achsen steuerbar bewegbar. Daher ergeben sich Schwierigkeiten bei der Verlegung des Wickeldrahtes an den Stirnseiten des Statorpakets, insbesondere bei einem Wickelschritt >1, da dann teilweise die Nutquerschnitte durch bereits verlegten Wickeldraht verdeckt und nicht mehr zugänglich sind.

Aus DE-B-10 11 505 und DE-B-10 21 465 sind Formteile zum Wickeln von Statorspulen und Haltevorrichtungen zum Wickeln von Statorspulen bekannt. Mit Hilfe eines gesonderten Formteils und einem Formführungsmittel, welches als Abstreifer dient, und ein zusätzliches Teil darstellt, wird der Wickeldraht an den Stirnseiten des Statorpakets beispielsweise bei einem Wickelschritt von >1 in entsprechender Weise verlegt. Hierbei können aber die noch zu bewickelnden Nutquerschnitte nicht in ausreichender Weise freigehalten werden. Ferner müssen das Endformteil und das Formführungsmittel hinsichtlich ihrer Auslegung auf einen jeweils gewünschten Wickelschritt abgestimmt werden. Eine universelle Bewicklung von Statorpaketen mit unterschiedlich wählbaren Wickelschritten ist dort nicht möglich. Auch ist der zusätzliche Aufwand für die zusätzlich benötigten Teile, wie Endformteil und Formführungsmittel, vorrichtungstechnisch gesehen sehr groß und man benötigt komplizierte Vorrichtungen zum Wickeln von Statorspulen.

In DE-A-20 31 756 ist ein Wickel- und Isolierkörper für Statoren und/oder Rotoren beschrieben. Dieser Wickel- und Isolierkörper dient aber nur als Endscheibe und es wird kein Wickeldrahtaufnahmeraum radial außerhalb der Stirnseite des Statorpakets bereitgestellt.

Aus FR-A-1 153 754 sind Weiterentwicklungen von Maschinen zum Bewickeln von Statorpaketen, insbesondere für Kleinmotore, bekannt. Hierbei wird ein vorgefertigter Isolatorkörper, welcher eine Mehrzahl von Fingern hat, welche zur Aufnahme der Kopfteile der Wicklungen dienen, auf der jeweiligen Stirnfläche des Stators angeordnet. Hiermit werden nicht nur die Kopfteile der Wicklungen derart geformt, daß sie symmetrisch sind, sondern daß die Kopfteile einer Serie von Wicklungen einen ähnlichen Stromwiderstand haben, welcher jenen der anderen Wicklungen entspricht. Die hierbei stirnseitig des Statorpakets eingesetzten, vorgeformten, ringförmigen Isolatorkörper dienen lediglich als Hilfslegeeinrichtung zur Ausformung der Kopfteile der Wicklungen in weitgehend übereinstimmender Weise. Das Bewickeln selbst erfolgt auf übliche, dort nicht näher beschriebene Weise. Es fehlen aber Hinweise auf Verfahrensmaßnahmen zum maschinellen Bewickeln eines Statorpakets.

Die Erfindung zielt daher darauf ab, Verfahrensweisen zum maschinellen Bewickeln eines Stators für Elektromaschinen bereitzustellen, welche ein Bewickeln des Stators mit einem beliebigen Wickelmuster mit einem Wickelschritt von >1 auf vollautomatische Weise gestatten. Ferner werden hierzu Drahtführer und speziell hierfür bestimmte Endscheiben bereitgestellt.

Nach der Erfindung weist ein Verfahren zum maschinellen Bewikkeln eines mit Statornuten zwischen Polschuhen und einer Statorbohrung versehenen Statorpakets, welches auf einer Drehaufnahme zum Drehbewegen des Statorpakets um seine Achse gehalten ist, und das für Elektromotoren bestimmt ist, unter Einsatz eines Drahtführers auf, daß zum Bewickeln des Stators mit einem beliebigen Wickelmuster mit einem Wickelschritt >1, d.h. unter Überspringen von wenigstens einer unmittelbar benachbarten Statornut, auf beiden Stirnseiten des Statorpakets je eine Endscheibe aus elektrisch isolierendem Material angebracht wird, welche einen radial und axial außerhalb der Statornuten liegenden und in Umfangsrichtung verlaufenden Wickeldrahtaufnahmeraum unter wenigstens teilweiser Freihaltung wenigstens einer direkt benachbarten Statornut bildet, und zwischen jeweils zwei benachbarten Statornuten einen radial vorspringenden Rückhaltefinger hat, daß der Wickeldraht unter Spannung mittels des Drahtführers derart verlegt wird, daß der Drahtführer mittels eines Haltearms in wenigstens zwei gesteuerten Achsen axial und radial bezogen auf das Statorpaket bewegt und durch die Statorbohrung hindurch Zusammen mit dem Haltearm verfahren wird, der Drahtführer um eine zu seiner Längsachse senkrechte Achse zum Verlegen des Wickeldrahts in den Wickeldrahtaufnahmeraum der jeweiligen Endscheibe gedreht wird, und das Statorpaket zur nächsten zu bewickelnden Statornut durch die Drehaufnahme mit entsprechendem Schaltschritt gedreht wird und der Wickeldraht durch den zugeordneten Rückhaltefinger der Endscheibe geführt wird.

Beim erfindungsgemäßen Verfahren wird somit an den beiden axial gegenüberliegenden Stirnseiten des Statorpakets je eine Endscheibe aus isolierendem Material angebracht, wodurch ein Wickeldrahtaufnahmeraum radial und axial außerhalb der Statornut gebildet wird, so daß die Wicklung beispielsweise auf der in Umfangsrichtung übernächsten Statornut derart verlegt werden kann, daß die hierbei übersprungene Statornut nicht zugewickelt wird, sondern wenigstens teilweise freigehalten wird, so daß sie bei einem nachfolgenden Wickelschritt noch bewickelt werden kann. Um den Wickeldraht in Umfangsrichtung in dem Wickeldrahtaufnahmeraum, welcher von der Endscheibe gebildet wird, eng anliegend anzuordnen, wird dieser bei der Weiterschaltbewegung des zu bewickelnden Statorpakets mit Hilfe des zugeordneten Rückhaltefingers geführt, welcher an der Endscheibe beim erfindungsgemäßen Verfahren jeweils zwischen zwei benachbarten Statornuten vorgesehen ist und radial vorspringend ausgebildet ist. Nach dem erfindungsgemäßen Verfahren läßt sich ein Stator für Elektromotoren mit einem beliebigen Wickelmuster auf vollautomatische Weise bewickeln, wobei das Wickelmuster ein Wickelschritt von >1 hat und somit wenigstens eine unmittelbar benachbarte Statornut beim Bewicklungsvorgang übersprungen wird. Mit Hilfe des erfindungsgemäßen Verfahrens lassen sich daher Statorpakete auf universelle Weise mit beliebigen Wickelmustern jeweils nach den gewünschten Erfordernissen bewickeln, ohne daß man das zu bewik-kelnde Statorpaket umspannen muß, so daß sich nach dem erfindungsgemäßen Verfahren auf äußerst wirtschaftliche Weise mit beliebigem Wickelmuster gewickelte Statoren für Elektromotoren herstellen lassen. Um den Wickeldraht in den von den Endscheiben gebildeten Wickeldrahtaufnahmeräumen radial und axial außerhalb der Statornut zu verlegen, führt der Drahtführer nicht nur eine translatorische Bewegung in axialer Richtung des Statorpakets, sondern in gesteuerter vorzugsweise mit einem gesonderten Antrieb versehenen Weise eine Drehbewegung um eine zu seiner Längsachse senkrechte Achse aus, so daß der Drahtführer wenigstens zwei, gesondert gesteuerte Bewegungachsen, nämlich eine Längsbewegungsachse in Axialrichtung des Statorpakets, und eine Drehbewegungsachse senkrecht zur Längsachse des Drahtführers, hat.

Bei dem erfindungsgemäßen Verfahren wird durch den Wickeldrahtaufnahmeraum der jeweiligen Endscheibe wenigstens die Hälfte des Querschnitts der Statornut freigehalten. Hierdurch kann eine eng gepackte Wicklung bei möglichst kleiner Baugröße des Stators und eine entsprechend hohe Leitungsdichte beim Elektromotor erzielt werden.

Eine bevorzugte Ausführungsform des erfindungsgemäßen Verfahrens weist folgende Schritte auf:
a) Anlegen des Wickeldrahts an einer Kontaktierstelle auf der vom Statorpaket abgewandten Seite einer der Endscheiben durch Klemmen, Umwickeln durch Ausführen einer Drehbewegung des Drahtführers um seine Längsachse oder dergleichen;
b) Vorbeiführen des Wickeldrahts an dem Rückhaltefinger der Endscheibe auf einer von der Kontaktierstelle abgewandten Seite;
c) Durchziehen des Wickeldrahts mit Hilfe des Drahtführers durch eine der Statornuten bis zum axial gegenüberliegenden Ende des Statorpakets mit aufgebrachter Endscheibe und geringfügig darüberhinaus, bei dem der Drahtführer mit dem Haltearm durch die Statorbohrung axial translatorisch verfahren wird, und Drehen des Drahtführers um seine zur Längsachse senkrechte Achse zum Einlegen des Wickeldrahts in den Wickelaufnahmeraum der Endscheibe unter Vorbeigang an der dem Statorpaket zugewandten Seite des Rückhaltefingers;
d) Verdrehen des Stators mit Endscheiben um seine Achse zur nach dem Wickelmuster nächsten zu bewickelnden Statornut;
e) Zurückfahren des Drahtführers unter Ausführung einer axialen Bewegung des Haltearms und des Drahtführers durch die Statorbohrung zum Verlegen des Wickeldrahts in der Statornut bis zum axial gegenüberliegenden Ende des Statorpakets und der angebrachten Endscheibe und geringfügig darüber hinaus und Drehen des Drahtführers um seine zur Längsachse senkrechte Achse zum Einlegen des Wickeldrahts in den Wikkelaufnahmeraum der Endscheibe unter Vorbeigang an der dem Statorpaket zugewandten Seite des Rückhaltefingers;
f) Verdrehen des Stators um seine Achse zur nächsten zugeordneten, zu bewickelnden Statornut;
g) Wiederholen der Schritte c) bis f) bis zur Fertigstellung des gewünschten Wickelmusters auf dem Statorpaket; und
h) Anbringen des Wickeldrahtendes an der Endkontaktierstelle an der Endscheibe durch Bewegen des Drahtführers zum Verschalten des fertigbewickelten Stators.

Bei dieser bevorzugten Ausführungsform des erfindungsgemäßen Verfahrens werden nicht nur die Statorwicklungen mit einem Wikkelschritt von >1 vollautomatisch erstellt, sondern es werden zugleich auch die jeweils erforderlichen gewünschten Verschaltungen des Stators an den Kontaktierstellen, wie Pins, Terminals oder dergleichen, vorgenommen. Diese Kontaktierstellen sind auf einer nach außen weisenden Seite wenigstens einer der Endscheiben vorgesehen. Mit Hilfe dieses Verfahrens können daher zusätzliche Arbeiten zum Verschalten des Stators und dessen Wicklungen nach dem Erstellen derselben entfallen, wodurch man eine noch wirtschaftlichere Herstellungsweise eines bewickelten Stators für Elektromotoren erhält. Alle diese Wicklungsvorgänge einschließlich der Verschaltungen an den Kontaktierstellen lassen sich mit Hilfe des in wenigstens zwei Bewegungsachsen gesteuert bewegbaren Drahtführers in Verbindung mit der Drehbewegung des Statorpakets um seine eigene Achse vollautomatisch unter Einsatz der jeweiligen auf das Statorpaket aufgesetzten Endscheiben ausführen.

Gemäß einem weiteren Aspekt nach der Erfindung wird ein Verfahren zum maschinellen Bewickeln eines mit Statornuten zwischen Polen und einer Statorbohrung versehenen Statorpakets auf einer Drehaufnahme zum Drehbewegen des Statorpakets um seine Achse mittels eines Drahtführers bereitgestellt, welches insbesondere für Statorpakete mit kleinen Abmessungen und kleinem Durchmesser der Statorbohrung, wie bei Kleinmotoren, bestimmt ist. Dieses Verfahren weist folgendes auf:
- Zum Bewickeln des Statorpakets mit einem beliebigen Wickelmuster mit einem Wickelschritt von größer 1 (>1), d.h. unter Überspringen von wenigstens einer unmittelbar benachbarten Statornut wird auf beiden Stirnseiten des Statorpakets je eine Endscheibe aus elektrisch isolierendem Material angebracht, welche einen radial und axial außerhalb der Statornuten liegenden und in Umfangsrichtung verlaufenden Wickeldrahtaufnahmeraum unter wenigstens teilweiser Freihaltung wenigstens einer direkt benachbarten Statornut bildet und zwischen jeweils zwei benachbarten Statornuten einen radial vorspringenden Rückhaltefinger hat,
- der Wickeldraht wird unter Spannung mittels des Drahtführers, welcher an seinem freien Ende hakenförmig gekrümmt ausgebildet ist, derart verlegt, daß der Drahtführer mittels eines Haltearms in wenigstens zwei gesteuerten Achsen axial und radial bezogen auf das Statorpaket bewegt wird,
- der Drahtführer um eine zu seiner Längsachse senkrechte Achse zum Verlegen des Wickeldrahts in den Wickeldrahtaufnahmeraum der jeweiligen Endscheibe gedreht wird, und
- das Statorpaket zur nächsten zu bewickelnden Statornut durch die Drehaufnahme mit entsprechendem Schaltschritt gedreht wird, und der Wickeldraht durch den zugeordneten Rückhaltefinger der Endscheibe geführt wird.

Bei diesem Verfahren wird nicht der Haltearm mit dem Drahtführer axial durch die Statorbohrung zur Verlegung des Wickeldrahtes durchgefahren, sondern nur der Drahtführer wird in entsprechender Weise an dem vorbestimmt positionierten Haltearm verdreht und gedreht, und dann zur Verlegung in den Statornuten durch die Statorbohrung bewegt. Hierbei ergeben sich im wesentlichen dieselben Vorteile wie bei dem voranstehenden Verfahren, abgesehen davon, daß nur der Drahtführer mit kleinen Abmessungen durch die Statorbohrung reicht. Dadurch, daß der Drahtführer um die zu seiner Längsachse senkrechte Achse frei drehbeweglich auch über Winkelbereiche von 240° und darüber hinaus ist, läßt sich der Drahtführer so verdrehen und bewegen, daß der Wickeldraht sich zuverlässig in den Wickeldrahtaufnahmeraum an der jeweiligen Endscheibe einlegen läßt. Auch bei dieser gedrängten Bauweise eines Statorpakets wird durch die Endscheibe ein Wickeldrahtaufnahmeraum gebildet, mittels welchem wenigstens die Hälfte des Querschnitts der Statornut für eine spätere und weitere Bewicklung freigehalten wird.

Eine zweckmäßige weitere Ausgestaltungsform dieses Verfahrens weist die folgenden Schritte auf:
a') Anlegen des Wickeldrahts an einer Kontaktierstelle auf der vom Statorpaket abgewandten Seite einer der Endscheiben durch Ausführen einer Bewegung des Drahtführers;
b') Vorbeiführen des Wickeldrahts an dem Rückhaltefinger der Endscheibe auf einer von der Kontaktierstelle abgewandten Seite;
c') Durchziehen des Wickeldrahts durch eine der Statornuten bis zum axial gegenüberliegenden Ende des Statorpakets mit aufgebrachter Endscheibe und geringfügig darüber hinaus, bei dem der Drahtführer durch die Statorbohrung axial bewegt wird und der Drahtführer um seine zur Längsachse senkrechte Achse zum Einlegen des Wickeldrahts in den Wickeldrahtaufnahmeraum der Endscheibe unter Vorbeigang an der dem Statorpaket zugewandten Seite des Rückhaltefingers gedreht wird;
d') Verdrehen des Statorpakets mit Endscheiben um seine Achse zur nach dem Wickelmuster nächsten, zu bewickelnden Statornut;
e') Zurückfahren des Drahtführers unter Ausführung einer axialen Bewegung zum Verlegen des Wickeldrahts in der Statornut bis zum axial gegenüberliegenden Ende des Statorpakets und der angebrachten Endscheibe und geringfügig darüber hinaus, und Drehen des Drahtführers um seine zur Längsachse senkrechte Achse zum Einlegen des Wickeldrahts in den Wickeldrahtaufnahmeraum der Endscheibe unter Vorbeigang an der dem Statorpaket zugewandten Seite des Rückhaltefingers;
f') Verdrehen des Statorpakets um seine Achse zur nächsten zugeordneten, zu bewickelnden Statornut;
g') Wiederholen der Schritte c') bis f') bis zur Fertigstellung des gewünschten Wickelmusters auf dem Statorpaket; und
h') Anlegen des Wickeldrahtendes an der Endkontaktierstelle an der Endscheibe durch Bewegen des Drahtführers zum Verschalten des fertig bewickelten Statorpakets.

Bei dieser bevorzugten Verfahrensweise wird der Wickeldraht auch gleich um Kontaktierstellen zur gewünschten Verschaltung des Stators am Wicklungsanfang und am Wicklungsende verlegt, so daß man eine vollautomatische Bewicklung und Verschaltung des Stators mit beliebigen und veränderbaren Wickelschritten erreichen kann, um selbst bei kleinen Motoren eine wirtschaftliche und auf effektive Weise durchführbare Bewicklung mit industrieller Anpassung an das jeweils gewünschte Wickelmuster zu gewährleisten.

Bei einer bevorzugte Ausführungsform eines Drahtführers zum maschinellen Bewickeln eines mit Statornuten und einer Statorbohrung versehenen Statorpakets für elektrische Maschinen oder Elektromotoren mit einem beliebigen Wickelmuster mit einem Wikkelschritt >1, d.h. unter Überspringen von wenigstens einer unmittelbar benachbarten Statornut, welcher zur Durchführung des zuerst beschriebenen Verfahrens bestimmt ist, ist der Drahtführer mittels eines Haltearms in zwei oder drei Achsen axial und radial bezogen auf das Statorpaket steuerbar angetrieben unter Durchgang durch die Statorbohrung bewegbar, und der Drahtführer ist an einem Ende des Haltearms um eine zu seiner Längsachse senkrechte Achse drehbar gelagert.

Durch diese nach der Erfindung wesentliche Auslegung des Drahtführers kann der Wickeldraht gemäß dem gewünschten Wickelmuster mit einem Wickelschritt >1 vollautomatisch an dem Statorpaket mit den an den beiden Stirnseiten aufgesetzten Endscheiben verlegt werden. Wesentlich bei dieser Ausführung des Drahtführers ist insbesondere die Tatsache gegenüber dem als Wickelfinger ausgebildeten Drahtführer und der Wickelnadel gemäß DE-A-37 09 687, daß der Drahtführer zusätzlich um eine zu seiner Längsachse senkrechte Achse drehbar bzw. verschwenkbar ist, so daß der Wickeldraht in den Wickeldrahtaufnahmeraum der Endscheiben radial und axial außerhalb der Statornut auf vorbestimmte Weise eingelegt werden kann.

Ferner wird eine Ausgestaltungsform eines Drahtführers zum maschinellen Bewickeln eines Statornuten und eine Statorbohrung aufweisenden Statorpakets für elektrische Maschinen oder Elektromotoren bereitgestellt, welcher zur Durchführung des Verfahrens zum Bewickeln von Statoren für Kleinmotoren bestimmt ist. Dieser Drahtführer ist mittels eines Haltearms in zwei oder drei Achsen axial und radial bezogen auf das Statorpaket steuerbar angetrieben bewegbar, an einem Ende des Haltearms um eine zu seiner Längsachse senkrechte Achse drehbar gelagert, und zwar so, daß der Drahtführer um Winkelbereiche von 240° und mehr drehbar ist, und das freie Ende des Drahtführers ist hakenförmig gekrümmt ausgebildet, so daß der Wickeldraht zuverlässig in den Wickeldrahtaufnahmeraum an der Endscheibe und durch Übergreifen und Hintergreifen des Rückhaltefingers an der Endscheibe eingelegt werden kann.

Vorzugsweise ist die Drehantriebseinrichtung für die Drehbewegung des Drahtführers um die zu seiner Längsachse senkrechte Achse am Haltearm des Drahtführers angebracht. Als Drehantriebseinrichtung kommt beispielsweise ein Riemen- oder Kettentrieb oder ein Schubgestänge in Betracht.

Um den Drahtführer in seinen jeweiligen Stellungen auch in den jeweils erforderlichen Drehstellungen festzulegen, kann der Drahtführer vorzugsweise einen Blockierzylinder umfassen, mittels welchem der Drahtführer in seiner Lage arretiert wird.

Vorzugsweise ist die Auslegung derart getroffen, daß der Drahtführer an einem Ende des Haltearms angeordnet und dort drehbar gelagert ist, und daß die Drehantriebseinrichtung für den Drahtführer am zur Lagerung des Drahtführers gegenüberliegenden Ende des Haltearms vorgesehen ist. Hierdurch erhält man eine die Zusatzeinrichtungen am Haltearm auf eine auf ausgewogene Weise dieselbe tragende Anordnung.

Ferner wird nach der Erfindung auch eine Endscheibe zum maschinellen Bewickeln eines mit Statornuten und einer Statorbohrung versehenen Statorpakets für elektrische Maschinen oder Elektromotoren mit einem beliebigen Wickelmuster mit einem Wickelschritt >1, d.h. unter Überspringen von wenigstens einer unmittelbar benachbarten Statornut, bereitgestellt, welche zur Durchführung der vorstehend erläuterten Verfahrensweisen bestimmt ist, aus einem elektrisch isolierenden Material, vorzugsweise Kunststoff, hergestellt ist und folgendes aufweist:
- einen die Stirnfläche des Statorpakets abdeckenden und eine zu erstellende Wicklung isolierenden Umfangsrandflansch,
- je einen zwischen jeweils zwei benachbarten Statornuten angeordneten und radial verlaufenden Rückhaltefinger, und
- einen radial und axial außerhalb der Statornuten liegenden Wickeldrahtaufnahmeraum, welcher zwischen dem Umfangsrandflansch und den Rückhaltefingern gebildet wird, und eine derartige Tiefe hat, daß die Statornuten wenigstens teilweise freigehalten sind.

Mit Hilfe der ferner nach der Erfindung im Zusammenhang mit dem Verfahren als wesentlich angegebenen Endscheibe und auf eine konstruktiv einfache und herstellungstechnisch günstige Weise wird erzielt, daß bei einem Wickelmuster mit einem Wickelschritt >1 die jeweils benachbarte Statornut im Querschnitt teilweise freigehalten wird und daher später in einem weiteren Wickelschritt der Wickelfolge bewickelt werden kann. Diese Endscheibe wird als gesondertes Teil zum eigentlichen Statorpaket hergestellt, und die Endscheibe wird dann auf der jeweiligen Stirnfläche des Statorpakets vor dem Bewickeln aufgesetzt, wozu vorzugsweise eine formschlüssige Verbindung mit den Statornuten hergestellt wird. Der von der Endscheibe gebildete Wickeldrahtaufnahmeraum ermöglicht dann eine Verlegung des Wickeldrahts entlang des Umfangs des Statorpakets bis zur nach dem Wickelmuster nächsten zu bewickelnden Statornut radial und axial außerhalb der Statornut auf eine solche Weise, daß die nach dem Wickelmuster übersprungene Statornut im Querschnitt zumindest 50 % gerechnet von dem Statornutgrund aus frei bleibt.

Vorzugsweise hat die Endscheibe einen axial verlaufenden und wenigstens teilweise in die jeweilige Statornut ragenden Kragen, welcher einteilig an der Endscheibe ausgeformt ist. Dieser Kragen dient sowohl als Abstandshalter als auch zur Isolierung gegenüber dem Statorpaket und der in der jeweiligen Statornut verlegten Wicklung. Somit erfüllt die Endscheibe zugleich auch eine wesentliche Funktion hinsichtlich der Isolierung für die Wicklung in der Statornut, welche mit Hilfe des Kragens in einem Abstand von dem Nutgrund der Statornut gehalten wird.

Vorzugsweise hat die Endscheibe noch eine weitere wesentliche Funktion, da nämlich wenigstens eine Endscheibe eine Kontaktierstelle zur Verschaltung trägt. Somit dient die Endscheibe zugleich für die Verschaltung der verlegten Wicklungen am Statorpaket, wobei die Kontaktierstellen beispielsweise von Pins, Terminals oder dergleichen gebildet werden können.

Vorzugsweise rastet der Kragen zur Positionierung und Arretierung der Endscheibe in die zugeordnete Statornut ein, wodurch man eine formschlüssige Verbindung von Endscheibe und Statornut am Statorpaket erhält.

Vorzugsweise hat die Endscheibe an dem die Stirnfläche des Statorpakets abdeckenden Umfangsrandflansch zur Bestimmung der Ausgangsposition für die Steuerung der Wickelvorgänge wenigstens eine radial vorspringende Indexiernase. Mit Hilfe dieser Indexiernase können dann unter Verwendung einer geeigneten Programmsteuerung die Wickelvorgänge hinsichtlich der Bewegungssteuerungen des Drahtführers und der Drehbewegung des Stators um seine Achse vollautomatisch durchgeführt werden, wobei die Indexiernase zur Bestimmung der Ausgangsposition oder der Grundposition des Statorpakets genommen wird, welche beispielsweise von der Programmsteuerung vollautomatisch erfaßt und gelesen und dann zur Bestimmung der Bewegungsabläufe verarbeitet werden kann. Gegebenenfalls können entsprechende Leseeinrichtungen vorgesehen sein, so daß sich eine lernend arbeitende Programmsteuerung einsetzen läßt, welche in einem Lernschritt vor der Ausführung der Wickelschrittbearbeitungen dann die Zahl der Statornuten und weiterer Kenngrößen des Stators erfassen und lesen kann, um dann hieraus die entsprechend zu steuernden Wikkelschritte unter Berücksichtigung der Ist-Abmessungen des zu bewickelnden Statorpakets und der aufgesetzten Endscheiben zu ermitteln.

Hieraus ist zu ersehen, daß die beim erfindungsgemäßen Verfahren wesentliche Endscheibe nicht nur für die Durchführung der Bewicklungsvorgänge am Statorpaket funktionell wesentlich ist, sondern daß sie mehrere Funktionen in sich vereinigt, wie z.B. die zusätzliche Funktion einer Isolierung der Wicklung, die Aufnahme von Kontaktierstellen und das Bereitstellen einer Indexiereinrichtung für die Ermittlung und Durchführung der Bewicklungen auf vollautomatische Weise. Die vorzugsweise vorgesehene Indexiernase an der Endscheibe wird dann nach der fertiggestellten Bewicklung des Stators und nach der Verschaltung desselben abgetrennt.

Zusammenfassend wird nach der Erfindung unter Einsatz des mehrachsig steuerbaren Drahtführers und unter Verwendung je einer zusätzlichen Endscheibe an den Stirnflächen des Statorpakets ein überraschend wirtschaftlich, äußerst vorteilhaftes Verfahren zum Bewickeln eines Stators für elektrische Maschinen oder Elektromotoren mit einem beliebigen Wickelmuster mit einem Wickelschritt >1 bereitgestellt. Hierdurch lassen sich unterschiedlich bemessene, unterschiedlich gestaltete und unterschiedlich zu bewickelnde Statorpakete auf universelle Weise mit dem jeweils gewünschten Wickelmuster mit einem Wickelschritt von >1 bewickeln.

Natürlich können auch zwei oder mehr Drahtführer nach den angegebenen Verfahrensweisen beim Bewickeln ein- und desselben Stators eingesetzt werden.

Die Erfindung wird nachstehend an Hand von bevorzugten Ausführungsformen unter Bezugnahme auf die beigefügte Zeichnung näher erläutert. Darin zeigen:
- Fig. 1a und 1b: jeweils eine Seitenansicht und eine Draufsicht auf eine bevorzugte Ausführungsform eines Drahtführers zur Verwendung beim erfindungsgemäßen Wickelverfahren,
- Fig. 2a bis 2f: Ansichten zur Verdeutlichung der bevorzugten Ausführungsform einer Endscheibe für ein Statorpaket zur Verwendung in Verbindung mit dem erfindungsgemäßen Verfahren, wobei Fig. 2a eine Seitenansicht der Endscheibe ist, Fig. 2b eine Schnittansicht entlang der Linie C-C in Fig. 2a ist, Fig. 2c eine vergrößerte Ansicht der Einzelheit A in Fig. 2a ist, und die Fig. 2d bis 2f jeweils Schnittansichten entlang den Linien D-D, E-E und F-F in Fig. 2c sind,
- Fig. 3a und 3b: Drauf-, Seiten- und vergrößerte Ansichten zur Verdeutlichung eines Wickelschrittes, bei dem eine Verschaltung am Wickeldrahtanfang an einer Kontaktierstelle gebildet von einem Pin vorgenommen wird, bevor die eigentliche Bewicklung des Statorpakets vorgenommen wird,
- Fig. 4: eine schematische Ansicht zur Verdeutlichung eines ersten Wickelschritts unter schematischer Zuordnung zu dem Statorpaket mit aufgesetzten Endscheiben und dem Drahtführer sowie einer Seitenansicht auf das Statorpaket mit aufgesetzter Endscheibe,
- Fig. 5: eine schematische Ansicht zur Verdeutlichung eines weiteren Wickelschritts unter Zuordnung eines Drahtführers zu einem schematisch dargestellten Statorpaket mit aufgesetzten Endscheiben sowie einer Draufsicht auf das Statorpaket mit angebrachter Endscheibe,
- Fig. 6: eine schematische Axialschnittdarstellung zur Verdeutlichung einer Wicklung am Statorpaket mit den jeweils stirnseitig angebrachten Endscheiben,
- Fig. 7: schematische Ansichten zur Verdeutlichung eines Wickelschemas beispielsweise für einen zwei-poligen Stator mit einer Seitenansicht des bewickelten und verschalteten Stators und den einzelnen Wickelfolgen,
- Fig. 8: eine Seitenansicht einer bevorzugten Ausführungsform eines Drahtführers zur Verwendung beim erfindungsgemäßen Wickelverfahren, welches insbesondere für kleine Motoren und kleinbemessene Statoren bestimmt ist,
- Fig. 9: eine Seitenansicht zur Verdeutlichung eines Wickelschritts, bei dem ein Verschaltung am Wickeldrahtanfang an einer Kontaktierstelle gebildet von einem Pin vorgenommen wird, bevor die eigentliche Bewicklung des Statorpakets erfolgt,
- Fig. 10: eine schematische Ansicht zur Verdeutlichung eines Wickelschritts unter schematischer Zuordnung zu einem Statorpaket mit aufgesetzten Endscheiben und dem Drahtführer nach Bewicklung einer Statornut beim Einlegen in den Wickeldrahtaufnahmeraum der zugeordneten Endscheibe, und
- Fig. 11: eine schematische Ansicht zur Verdeutlichung eines weiteren Wickelschritts unter Zuordnung eines Drahtführers zu einem schematisch dargestellten Statorpaket mit aufgesetzten Endscheiben, wobei der Drahtführer in einer Position gezeigt ist, in welcher der Wickeldraht in den Wickeldrahtaufnahmeraum, welcher von der Endscheibe gebildet wird, unter Vorbeigang an dem Rückhaltefinger eingelegt wird.

In den Figuren der Zeichnung sind gleiche oder ähnliche Teile zur Verbesserung der Übersichtlichkeit mit denselben Bezugszeichen versehen und die dargestellten Beispiele stellen selbstverständlich nur eine bevorzugte Ausführungsform ohne jegliche Beschränkung auf die dort gezeigten Einzelheiten dar.

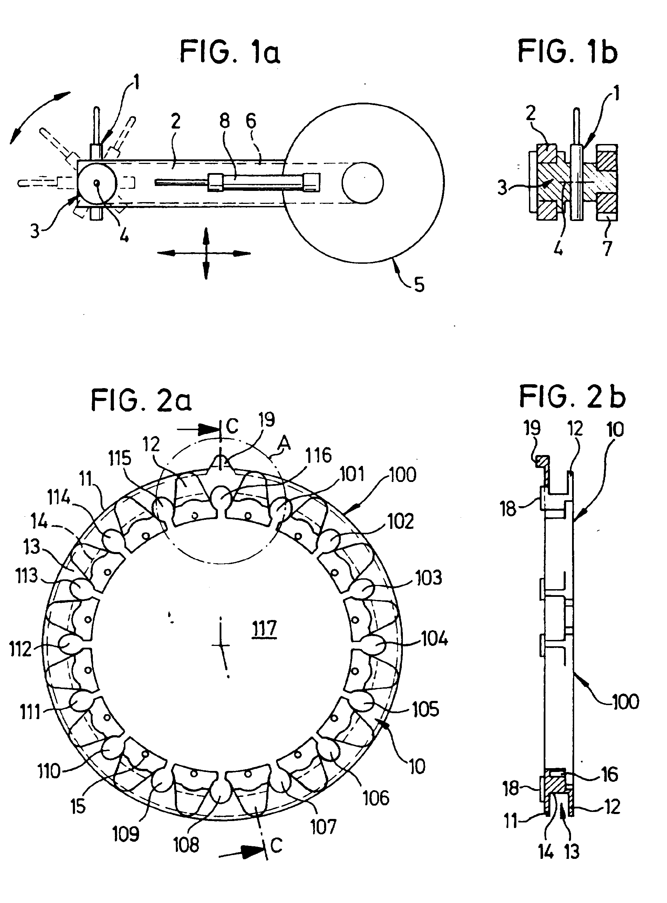

Zuerst wird unter Bezugnahme auf die Fig. 1a und 1b eine bevorzugte Ausführungsform des dort insgesamt mit 1 bezeichneten Drahtführers erläutert. Der Drahtführer 1 ist an einem Haltearm 2 mittels einer Drehlagerung 3 um eine mit 4 bezeichnete Drehachse - wie mit Pfeilen angedeutet - drehbar gelagert, wobei die Drehachse 4 senkrecht zur Längsrichtung bzw. Längsachse des Drahtführers 1 ist. Dieser Drahtführer 1 kann als eine Drahtdüse ausgelegt sein, durch deren Innenraum der zu verlegende Wickeldraht geht (was nicht näher dargestellt ist), und der aus einer entsprechenden Vorratseinrichtung unter einer gewissen Grundspannung abgezogen wird. Für die Ausführung der Drehbewegung des Drahtführers 1 um die Drehachse 4 am Haltearm 2 ist eine insgesamt mit 5 bezeichnete Drehantriebseinrichtung vorgesehen, welche am Haltearm 2 in der Nähe des von der Drehachse 4 gegenüberliegenden Endes des Haltearms 2 angebracht ist. Mit Hilfe eines Ketten- oder Riementriebs 6 oder gegebenenfalls eines nicht näher dargestellten Schubgestänges wird die Antriebsbewegung von der Drehantriebseinrichtung auf ein Ritzel 7 derart übertragen, daß der Drahtführer 1 bei entsprechender Drehantriebsbewegung des Drehantriebs 5 eine Drehbewegung bzw. eine Schwenkbewegung in die mit einem Pfeil angedeutete Richtungen um die Drehachse 4 in gesteuerter Weise ausführt. Der Haltearm 2 zusammen mit dem dort drehbar gelagerten Drahtführer 1 ist ferner - wie mit Pfeilen schematisch angedeutet - in wenigstens eine, vorzugsweise eine weitere Bewegungsrichtung, welche vorzugsweise senkrecht zu der ersten Bewegungsrichtung ist, an einer geeigneten Wickelvorrichtung bewegbar angeordnet, wie dies beispielsweise in DE-A-37 09 687 im Zusammenhang mit der dort vorgesehenen Wickelnadel und des Wickelfingers angegeben ist. Die näheren Einzelheiten hinsichtlich der Bewegungsantriebe für die Anordnung aus Haltearm 2 und Drahtführer 1 lassen sich aus dieser vorveröffentlichten Patentanmeldung entnehmen. Vorzugsweise ist ferner dem Drahtführer 1 noch ein hydraulisch, pneumatisch oder elektromagnetisch sowie als Kombination hiervon betätigbarer Blockierzylinder 8 zugeordnet, mittels welchem der Drahtführer 1 in der jeweils gewünschten Position festgehalten und arretiert werden kann, um den Drahtführer 1 zuverlässig in der gewünschten Position auch unter Berücksichtigung der Drahtführungskräfte und des Gegenzugs zu halten.

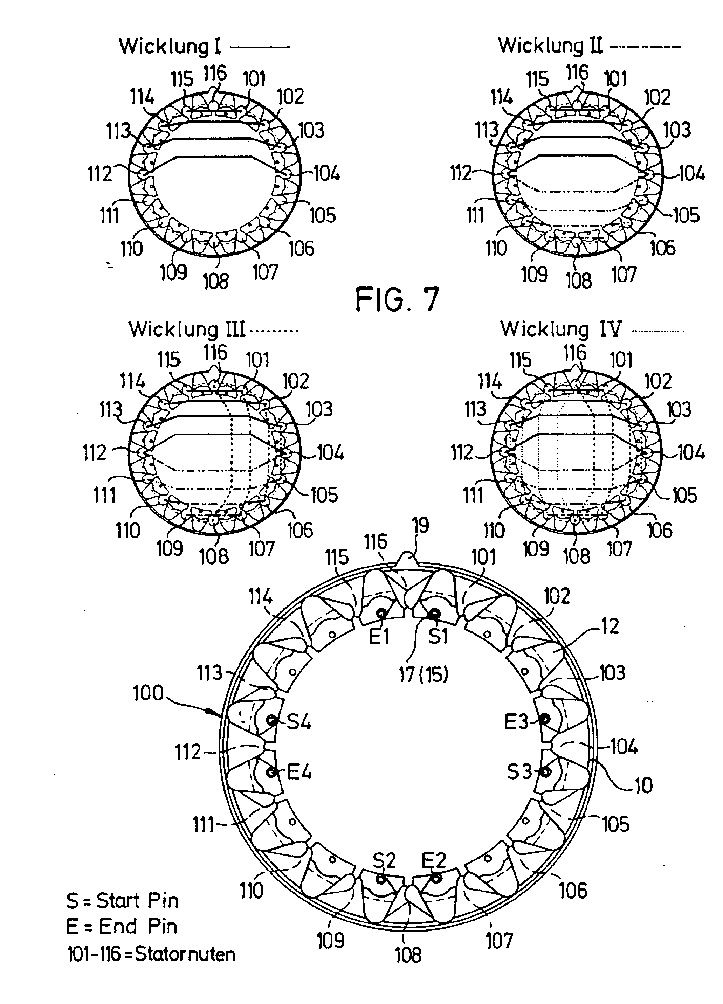

In den nachstehend erläuterten weiteren Figuren der Zeichnung sind im Zusammenhang mit der Endscheibe und dem Statorpaket des Statorkörpers in Umfangsrichtung in regelmäßigen Abständen angeordnete Statornuten gezeigt, welche in Fig. 7 zur Verdeutlichung des dort gezeigten Wickelschemas an dem Beispiel vollständig mit 101 bis 116 bezeichnet sind. Diese Statornuten 101 bis 116 sind wie üblich in radialer Richtung auf die Statormittelachse weisend offen. Bei einzelnen der nachstehenden Figuren, beispielsweise im Zusammenhang mit dem nach der Erfindung wesentlichen Verfahrensablauf, sind nur einzelne der Statornuten 101 bis 116 aus Übersichtlichkeitsgründen bezeichnet, um ein Beispiel eines Wickelmusters mit einem Wickelschritt >1 hinsichtlich den nach der Erfindung wesentlichen Verfahrensschritten zu erläutern.

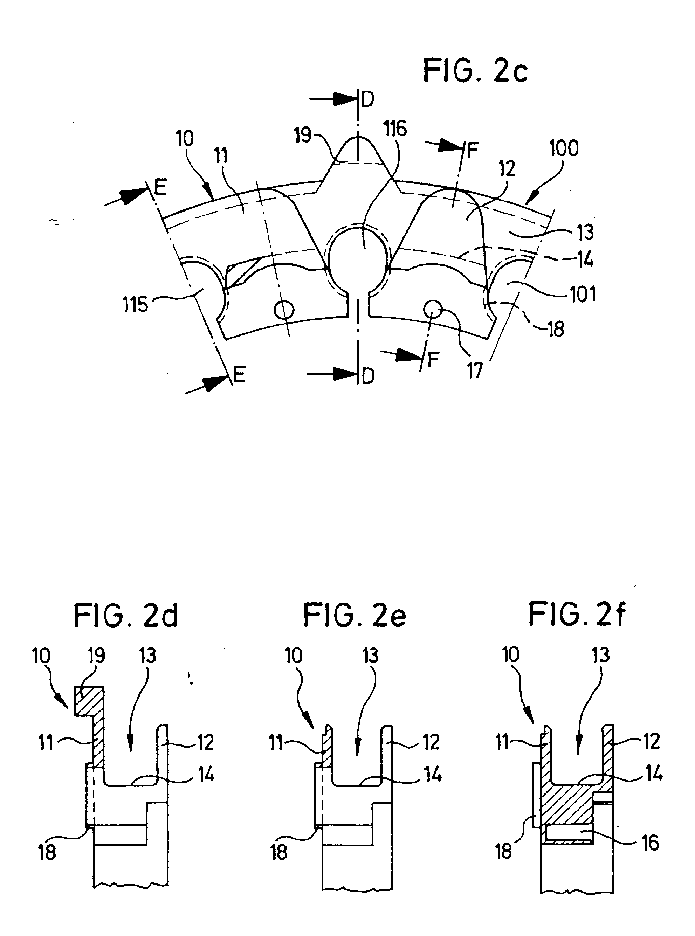

An Hand der Figuren 2a bis 2f wird eine bevorzugte Ausführungsform einer insgesamt mit 10 bezeichneten Endscheibe als Einzelteildarstellung gezeigt und erläutert.

Die Endscheibe 10 ist aus einem elektrisch isolierenden Material, vorzugsweise einem Kunststoffmaterial, als gesondertes Einzelteil hergestellt. Die Endscheibe 10 ist hinsichtlich ihren Abmessungen an ein zu bewickelndes Statorpaket 100 angepaßt, welches über den Umfang verteilt in regelmäßigen Abständen Statornuten 101 bis 116 und eine axial durchgehende Statorbohrung 117 hat.

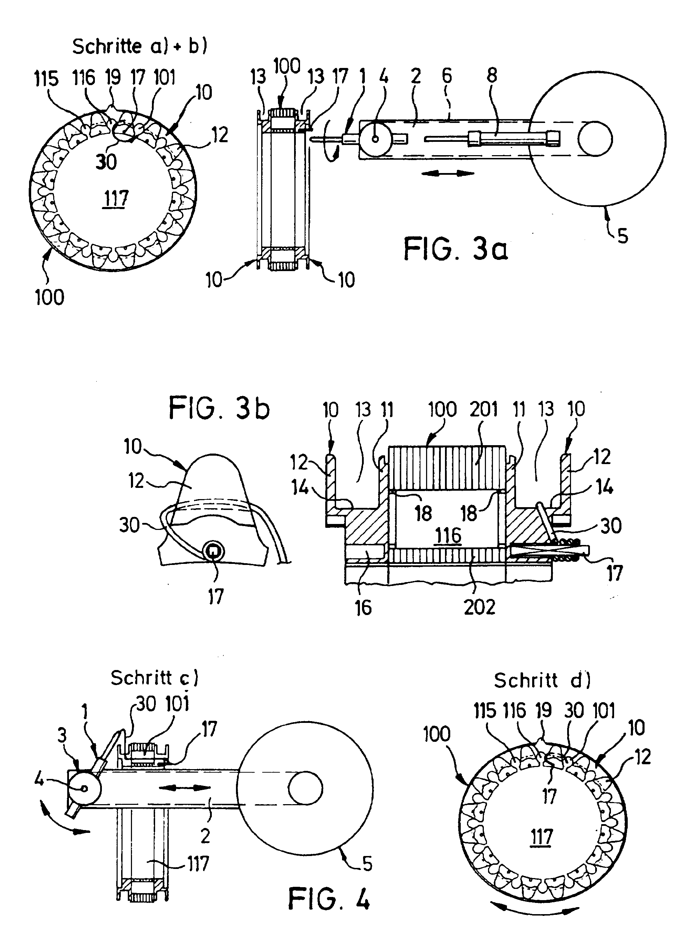

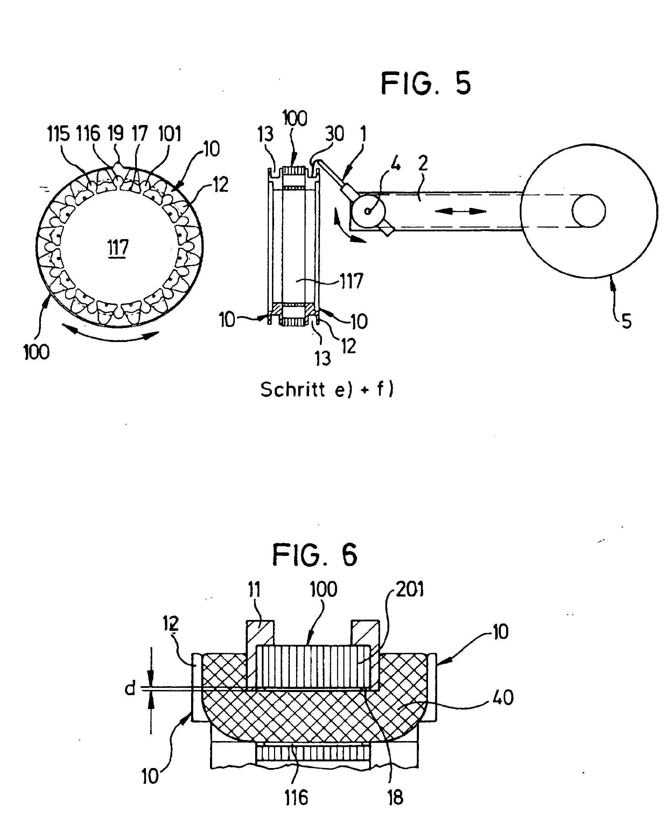

Die Endscheibe 10 hat eine die Stirnfläche des jeweiligen Statorpakets 100 abdeckenden und die zu erstellenden Wicklungen isolierenden Umfangsrandflansch 11 und einen axial in einem Abstand hierzu zwischen jeweils zwei benachbarten Statornuten 101 bis 116 angeordneten Rückhaltefinger 12, welcher radial vorspringend und etwa parallel zum Umfangsrandflansch 11 verlaufend vorgesehen ist. Zwischen dem axial beabstandeten Umfangsrandflansch 11 und den über den Umfang verteilten Rückhaltefingern 12 wird ein Wickeldrahtaufnahmeraum 13 gebildet, welcher unter Bezugnahme auf das Statorpaket 100 radial und axial außerhalb der Statornuten 101 bis 116 liegt. Der Wickeldrahtaufnahmeraum 13 hat eine derartige Tiefe, daß die zugeordneten Statornuten 101 bis 116 wenigstens teilweise im Querschnitt bis zu beispielsweise etwa 50 % freigehalten sind. Dies ist daraus zuersehen, daß der Boden 14 des Wickeldrahtaufnahmeraums 13, welcher in Verlängerung der Achsrichtung des Statorpakets 100 verläuft, in Radialrichtung des Statorpakets 100 gesehen nur geringfügig über dem Nutgrund der Statornuten 101 bis 116 liegt. Das Statorpaket 100 mit den Statornuten 101 bis 116 ist in Fig. 2a und Fig. 2c in gebrochenen Linien unter Zuordnung zu der Endscheiben 10 gezeigt. Ferner lassen sich die näheren Einzelheiten hinsichtlich des Wickeldrahtaufnahmeraums 13 auch in Verbindung mit den Fig. 3b und 6 ersehen, welche später noch näher erläutert werden.

Ferner hat die Endscheibe 10 Kontaktierstellen 15, wozu unter Zuordnung zu dem jeweiligen Rückhaltefinger 12 beispielsweise eine Aufnahmeöffnung 16 vorgesehen ist, in welche sich ein Pin 17 als Kontaktierstelle einsetzen läßt, welcher beispielsweise in Fig. 3b gezeigt und nachstehend näher beschrieben ist. Natürlich können gegebenenfalls auch andere Ausbildungsformen von Kontaktierstellen 15 vorgesehen sein, bei denen es sich beispielsweise um Terminals oder dergleichen handeln kann. Diese Kontaktierstellen 15 liegen radial von außen her zugänglich an der Endscheibe 10 frei, d.h., sie sind an dem Rückhaltefinger 12 an der vom Statorpaket 100 abgewandten Seite vorgesehen. Vorzugsweise sind die Kontaktierstellen 15 nur an einer einzigen Endscheibe 10 zusammengefaßt.

Die Endscheibe 10 hat ferner im Bereich des Umfangsrandflansches 11 auf der Stirnseite des Statorpakets 100 zugewandten Seite einen Isolierkragen 18, welcher, wie beispielsweise in Fig. 6 gezeigt ist, formschlüssig in die zugeordneten Statornuten 101 bis 116 eingreift. Dieser Isolierkragen 18 ragt teilweise in die Statornuten 101 bis 116 und isoliert - wie beispielsweise in Fig. 6 gezeigt - die erstellte Wicklungen 40 gegenüber dem Statorpaket 100, und zugleich bewirkt der Isolierkragen 18, daß diese Wicklung 40 einen vorbestimmten Abstand zu der jeweiligen Statornut 101 bis 116 hat.

Wie ferner aus den Fig. 2a, 2b, 2c und 2d zu ersehen ist, ist wenigstens eine Indexiernase 19 vorgesehen, welche an dem die Stirnfläche des Statorpakets 100 abdeckenden Umfangsrandflansch 11 vorgesehen ist und radial vorspringend ausgebildet ist. Diese Indexiernase 19 dient zur Bestimmung der Ausgangsposition für die Steuerung der Wickelvorgänge, und sie wird nach der fertiggestellten Bewicklung des Stators bzw. des Statorpakets 100 äbgetrennt. Die Lage der Indexiernase 19 ist unter Bezugnahme auf die Endscheibe 10 in ihrer an der Stirnfläche des Statorpakets 100 angebrachten Anordnung erläutert.

Nachstehend werden an Hand von den Fig. 3 bis 6 bevorzugte Verfahrensabläufe gegliedert in einzelne Verfahrensschritte zur Verdeutlichung des Verfahrens nach der. Erfindung näher beschrieben. Ganz allgemein gesehen wird bei dem Verfahren zum maschinellen Bewickeln eines mit Statornuten 101 bis 116 zwischen Polen 201 bis 215 und einer Statorbohrung 117 versehenen Statorpakets 100 auf einer Drehaufnahme zum Drehbewegen des Statorpakets um seine Achse mittels eines Drahtführers 1 vor dem Bewickeln des Stators 100 mit einem beliebigen Wickelmuster mit einem Wickelschritt von >1, d.h. unter Überspringen von wenigstens einer unmittelbar benachbarten Statornut, auf beiden Stirnseiten des Statorpakets 100 je eine Endscheibe 10 aus elektrisch isolierendem Material angebracht, welche einen radial und axial außerhalb der Statornuten 101 bis 116 liegenden und in Umfangsrichtung verlaufenden Wickeldrahtaufnahmeraum 13 unter wenigstens teilweiser Freihaltung wenigstens einer direkt benachbarten Statornut 101 bis 116 bildet, und zwischen jeweils zwei benachbarten Statornuten 101 bis 116 einen radial vorspringenden Rückhaltefinger 12 hat. Zum Bewickeln wird dann ein Wik-keldraht 30 unter Spannung mittels des Drahtführers 1 derart verlegt, daß der Drahtführer 1 mittels eines Haltearms 2 in wenigstens zwei gesteuerten Achsen bewegt und durch die Statorbohrung 117 hindurch verfahren wird, der Drahtführer 1 um eine zu seiner Längsachse senkrechte Achse zum Verlegen des Wikkeldrahts 30 in den Wickeldrahtaufnahmeraum 13 der jeweiligen Endscheibe 10 gedreht wird, und das Statorpaket 100 zur nächsten zu bewickelnden Statornut 101 bis 116 durch die nicht näher dargestellte Drehaufnahme mit entsprechendem Schaltschritt gedreht wird, und der Wickeldraht 30 durch den zugeordneten Rückhaltefinger 12 der Endscheibe 10 geführt wird.

Eine bevorzugte Ausführungsform dieser Verfahrensweise unterteilt in einzelne Wickelschritte wird nunmehr konkret unter Bezugnahme auf die Fig. 3a bis 6 erläutert. In Fig. 6 ist dann als Beispiel eine fertiggestellte, bewickelte Statornut als Einzelansicht in axialer Schnittdarstellung verdeutlicht.

An Hand den Fig. 3a und 3b werden die folgenden Schritte a) und b) näher beschrieben. Bei dem Schritt a) - siehe Fig. 3a und 3b - wird der Wickeldraht 30 an einer Kontaktierstelle 15 (Pin 17) der Endscheibe 10 angelegt und beispielsweise um denselben gewickelt. Die Kontaktierstelle 15 liegt auf der vom Statorpaket 100 abgewandten Seite der Endscheibe 10. Hierzu führt der Drahtführer 1 beispielsweise, wie mit einem Pfeil in Fig. 3a angedeutet ist, eine Drehbewegung um seine Längsachse aus, um den Wikkeldraht 30 mit mehreren Umwicklungen um den Pin 17, welcher beispielsweise ein Start-Pin ist, festzulegen. Der Wickeldraht 30 wird dann nach dem Anlegen an der Kontaktierstelle 15 bzw. dem Anwickeln am Pin 17 gemäß einem Schritt b) auf der von der Kontaktierstelle 15 abgewandten Seite am Rückhaltefinger 12 der Endscheibe 10 vorbeigeführt, wie dies aus der linken Darstellung in Fig. 3b zu ersehen ist. Hierbei wird der Wickeldraht 30 in den von der Endscheibe 10 gebildeten Wickeldrahtaufnahmeraum 13 eingelegt, und wie in der linken Darstellung in Fig. 3 zu ersehen ist, zu der ersten zu bewickelnden Nut 101 geführt. Wie mit einem Pfeil in Fig. 3a und Fig. 4 dargestellt ist, wird der Wickeldraht 30 dann beispielsweise durch die Statornut 101 bis zum axial gegenüberliegenden Ende des Statorpakets 100 mit aufgebrachter Endscheibe 10 und geringfügig darüber hinaus durchgezogen. Hierbei führt der Drahtführer 1 mit dem Haltearm 2 eine Bewegung in axialer Richtung durch die Statorbohrung 117 aus, und der Drahtführer 1 wird axial verfahren. Wie ferner aus Fig. 4 der Zeichnung zu ersehen ist, wird schließlich bei dem Schritt c) der Drahtführer 1 um seine zur Längsachse senkrechte Achse 4 gedreht bzw. verschwenkt. Hierdurch wird der Wickeldraht 30 in den von der Endscheibe 10 auf der gegenüberliegenden Seite des Statorpakets 100 gebildeten Wickeldrahtaufnahmeraum 13 eingelegt. Zugleich wird in einem Schritt d), wie dies in der rechten Darstellung in Fig. 4 gezeigt ist, der Stator 100 mit den aufgesetzten Endscheiben 10 um seine Achse gedreht und der Wickeldraht 30 geht hierbei an der dem Statorpaket 100 zugewandten Seite des Rückhaltefingers 12 der Endscheibe 10 vorbei bis zur nach dem Wickelmuster nächsten zu bewickelnden Statornut, welche beim dargestellten Beispiel von der Statornut 115 gebildet wird. Dieser Wickelvorgang stellt einen Wickelschritt >1 dar, da die unmittelbar der Nut 101 in Umfangsrichtung benachbart liegende Statornut 116 beim Bewickeln übersprungen wird und somit die Statornut 115 als nächstes bewickelt wird. Wie aus Fig. 3b zu ersehen ist, liegt der von der Endscheibe 10 gebildete Wickeldrahtaufnahmeraum 13 radial und axial außerhalb der Statornuten 101 bis 116 und der Boden 14 des Wickeldrahtaufnahmeraums 13 liegt möglichst weit außen, so daß die zugeordnete Statornut 101 bis 116 möglichst weitgehend freigehalten ist, wobei es sich beispielsweise um die Statornut 116 handelt, welche bei den voranstehend beschriebenen Verfahrensschritten a) bis d) beim Wikkelvorgang übersprungen wurde.

An Hand von Fig. 5 werden die weiteren Verfahrensschritte e) und f) näher verdeutlicht. Bei dem Schritt e) wird der Drahtführer 1 unter Ausführung einer axialen Bewegung des Haltearms 2 durch die Statorbohrung 117 zurückgeführt, wodurch der Wickeldraht 30 beispielsweise in der Statornut 115 verlegt wird. Der Drahtführer 1 wird hierbei zum axial gegenüberliegenden Ende des Statorpakets 100 und der angebrachten Endscheibe 10 und geringfügig darüber hinaus bewegt. Dann wird der Drahtführer 1 um seine zur Längsachse senkrechte Achse 4 unter entsprechender Steuerung durch die Drehantriebseinrichtung 5 gedreht bzw. verschwenkt, und der Wickeldraht 30 wird in den von der Endscheibe 10 gebildeten Wickeldrahtaufnahmeraum 13 unter Vorbeigang an der dem Statorpaket 100 zugewandten Seiten des Rückhaltefingers 12 gelegt und verlegt. Dann wird - wie dies mit einem Pfeil in der linken Darstellung der Fig. 5 verdeutlicht ist - der Stator bzw. das Statorpaket 100 um seine Achse zur nächsten zugeordneten, zu bewickelnden Statornut 101 bis 116 gedreht. Bei einem weiteren Verfahrensschritt g) werden die Schritte c) bis f) wiederholt, bis das gewünschte Wickelmuster auf dem Statorpaket 100 mit einem Wickelschritt von >1 fertiggestellt ist. Schließlich wird dann gemäß einem Schritt h) ähnlich wie bei dem Schritt a) das Ende des Wickeldrahts 30 an einer Endkontaktierstelle (beispielsweise einem End-Pin 17) dadurch angelegt und angebracht, daß der Drahtführer 1 in entsprechender Weise bewegt wird. Hierdurch wird der fertigbewickelte Stator oder das fertigbewickelte Statorpaket 100 zugleich verschaltet. Nunmehr ist nach Ausführung der Verfahrensschritte a) bis h) ein Stator vollständig mit dem gewünschten Wickelmuster bewickelt und er ist zugleich verschaltet. Es wird dann die Indexiernase 19 der Endscheibe 10 abgetrennt und der bewickelte Stator 100 kann seinem bestimmungsgemäßen Einsatzzweck für eine elektrische Maschine oder einem Elektromotor zugeführt werden.

In Fig. 6 ist zur Verdeutlichung eine einzelne bewickelte Statornut des Statorpakets 100 gezeigt. Die gemäß dem erfindungsgemäßen Verfahren erstellte Wicklung aus dem Wickeldraht 30 ist insgesamt mit 40 bezeichnet. Wie dort zu ersehen, wird die Wicklung 40 radial und axial außerhalb der Statornut 101 bis 116 in den den Endscheiben 10 gebildeten Wickeldrahtaufnahmeräumen 13 verlegt, und die Isolierkragen 18 an den Endscheiben 10 dienen als Distanzelemente zu den zugeordneten Statornut 101 bis 116. Hierdurch wird die Wicklung 40 gegenüber dem Statorpaketen 100 ausreichend isoliert und dank des Isolierkragens 18 der Endscheiben 10 ist somit ein Zwischenraum mit einem Abstand d vorhanden. Da der Wickeldraht 30 der Wicklung 40 radial und axial außerhalb in den Wickeldrahtaufnahmeräumen 13 der Endscheiben 10 verlegt wird, wird beim Überspringen der nächsten benachbarten, zu bewickelnden Statornut 101 bis 116 diese im Querschnitt freigehalten und kann dann in einem späteren Wickelschritt bei der Wickelablauffolge weitgehend ungehindert bewickelt werden, so daß sich mit dem erfindungsgemäßen Verfahren beliebige Wickelmuster mit einem Wickelschritt von >1 ohne Schwierigkeiten vollautomatisch erstellen lassen.

In Fig. 7 ist schematisch ein Wickelschema für einen zwei-poligen Stator gezeigt. Die Wickelfolge umfaßt die Erstellung der jeweils unterschiedlich gekennzeichneten Wicklungen I bis IV, wobei bei diesem Wickelmuster ein Wickelschritt pro Wicklung von >1 vorgesehen ist. Bei der ersten Wicklung I in Fig. 7 werden nach dem erfindungsgemäßen Verfahren die Statornuten 101 und 115, die Statornuten 102 und 114, die Statornuten 103 und 113 und die Statornuten 104 und 112 bewickelt (siehe durchgezogene Linie für die erste Wicklung I). Die zweite Wicklung II, welche mit einer gebrochenen und mit zwei Punkten versehenen Linie eingetragen ist, wird nach dem erfindungsgemäßen Verfahren derart erstellt, daß die Statornuten 104 und 112, die Statornuten 105 und 111, die Statornuten 106 und 110 und die Statornuten 107 und 109 bewickelt werden.

Die dritte Wicklung III, welche mit einer punktierten Linie in Fig. 7 eingetragen ist, umfaßt dann die Bewicklung der Statornuten 108 und 116, der Statornuten 107 und 101, der Statornuten 106 und 102 und 105 und 103. Die dann zu erstellende vierte Wicklung IV, welche mit einer punktierten Linie in Fig. 7 eingetragen ist, umfaßt die Bewicklung der Statornuten 103 und 105, der Statornuten 102 und 106, der Statornuten 101 und 107 und der Statornuten 116 und 108. Die jeweils am Statorpaket 100 erstellten Wicklungen werden dann jeweils an den zugeordneten Start-Pins S und End-Pins E festgelegt, wodurch zugleich beim erfindungsgemäßen Verfahren beispielsweise die Verschaltung des bewickelten Stators vorgenommen wird. Diese End-Pins und Start-Pins sind in der Fig. 7 mit S1 und E1, S2 und E2, S3 und E3 sowie mit S4 und E4 bezeichnet. Diese sind den in der Wickelfolge angegebenen Wicklungen I bis IV zugeordnet.

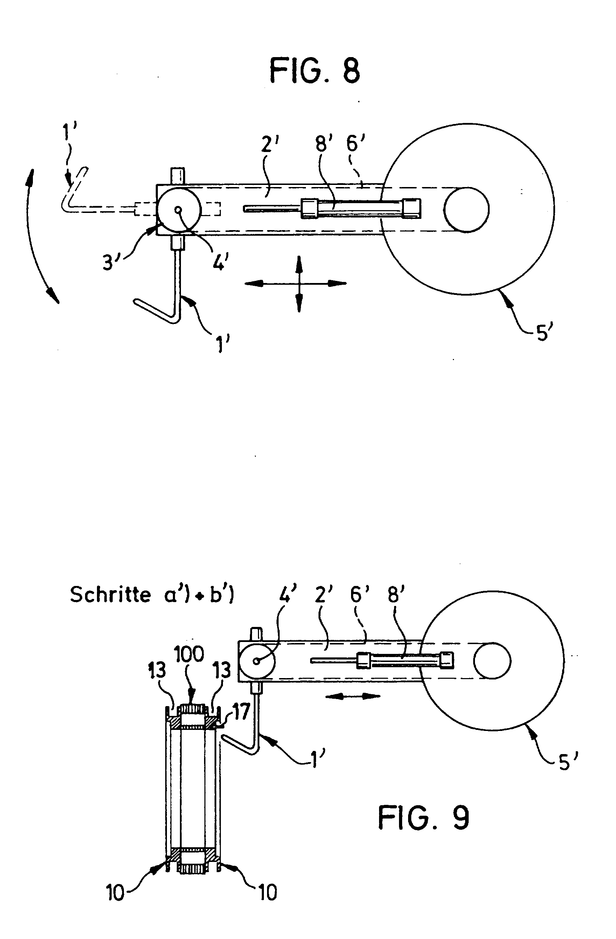

Bei dieser an Hand den Figuren 8 bis 11 erläuterten alternativen Verfahrensweise, welche insbesondere zur Bewicklung von kleinbemessenen Statoren für Kleinmotoren bestimmt ist, sind gleiche oder ähnliche Teile mit denselben Bezugszeichen versehen, welche aber zur Unterscheidung gegenüber der voranstehend erläuterten Verfahrensweise mit einem "'" versehen sind. Dies gilt auch für die entsprechend zugeordneten Verfahrensschritte. Soweit die Verfahrensschritte und die konstruktiven Einzelheiten mit der voranstehend erläuterten Ausführungsform übereinstimmen, sind die dort gemachten Angaben sinngemäß auch zum Verständnis an dieser Stelle einzufügen. Es werden daher nur die wesentlichen Unterschiede und Abweichungen zu dieser voranstehend erörterten Ausführungsform hauptsächlich näher beschrieben.

In konstruktiver Hinsicht unterscheidet sich der Drahtführer 1' bei dieser alternativen Ausführungsform dadurch, daß er an seinem freien Ende hakenförmig gekrümmt ausgebildet ist. Wie in Figur 9 gezeigt ist, wird dieser so ausgebildete Drahtführer 1' an dem Haltearm 2' um die Drehachse in entsprechender Weise gedreht und mit Hilfe des Haltearms in vorbestimmter Weise bewegt, so daß beispielsweise der Wickeldrahtanfang um eine Kontaktierstelle, wie einen Pin 17, gewickelt werden kann. Die Figur 9 verdeutlicht somit die voranstehend im Zusammenhang mit Figur 3 a) beschriebenen Verfahrensschritte a') und b'). Es wird also mit Hilfe des Drahtführers 1' der Wickeldraht 30 an einer Kontaktierstelle 15 angelegt und er wird an dem Rückhaltefinger 12 der Endscheibe 10 auf einer von der Kontaktierstelle 15 abgewandten Seite vorbeigeführt. Die Kontaktierstelle weist beim dargestellten Beispiel einen Pin 17 auf.

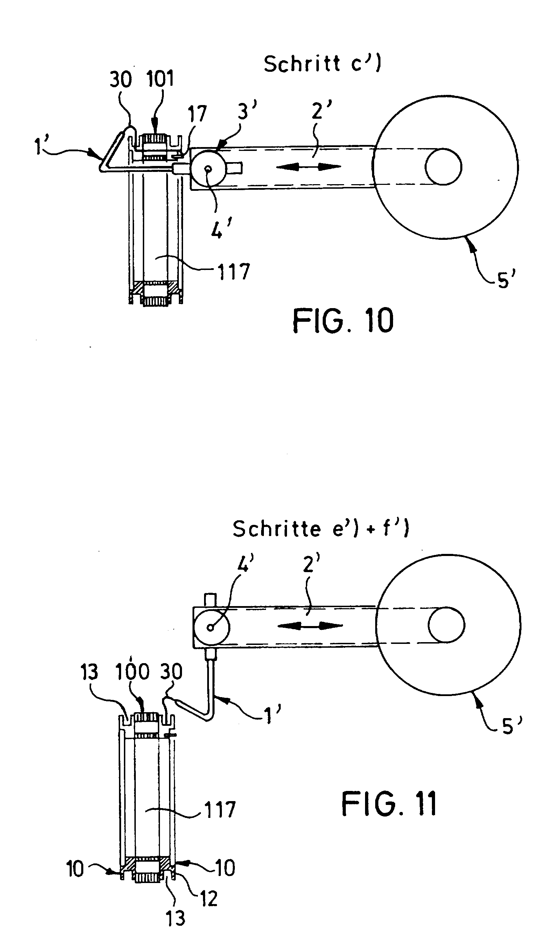

Figur 10 dient zur Verdeutlichung des Verfahrensschritts c'), bei dem die Wickelaufgaben gemäß der voranstehenden Verfahrensweise mit dem Schritt c) vorgenommen werden. In Abweichung von der voranstehend beschriebenen Verfahrensweise wird gemäß Figur 10 nur der Drahtführer 1' durch die Statorbohrung 117 und nicht die Anordnung aus Haltearm 2' und Drahtführer 1' zum Verlegen des Wickeldrahts 30 in der zugeordneten Statornut bewegt. Am Ende dieses Verfahrensschritts c'), welcher in Figur 10 verdeutlicht wird, wird dann mit Hilfe des am freien Ende hakenförmig gekrümmt ausgebildeten Drahtführers 1' der Wickeldraht 30 in den Wickeldrahtaufnahmeraum 13, welcher in Verbindung mit der aufgesetzten Endscheibe 10 gebildet wird, direkt eingelegt, ohne daß hierzu der Haltearm 2' durch die Statorbohrung 117 axial durchbewegt wird.

Nach Figur 11 werden dann die Schritte e') und f') beim Wickelverfahren mit Hilfe des Drahtführers 1' ausgeführt, indem der Drahtführer 1' dann nach Weiterschaltung des Statorpakets zu einer entsprechend des Wickelmusters nächsten, zu bewickelnden Statornut und nach Verlegen des Wickeldrahts in derselben dann wie in Figur 11 gezeigt, in entsprechender Weise so verdreht wird, daß der Wickeldraht 30 mit Hilfe des Drahtführers 1' und dessen hakenförmig gekrümmt ausgebildeten freien Ende in den entsprechenden Wickeldrahtaufnahmeraum eingelegt wird, welcher in Verbindung mit der Endscheibe 10 begrenzt wird. Diese nach dem alternativen Verfahren wesentlichen und gegenüber der voranstehend erläuterten Verfahrensweise unterschiedlichen Verfahrensschritte werden dann wiederholt ausgeführt, bis die Bewicklung des Statorpakets 100 fertiggestellt ist.

Der wesentliche Unterschied gegenüber der voranstehend erläuterten Verfahrensweise ist somit darin zu sehen, daß nur der Drahtführer 1', welcher in entsprechender Weise an seinem freien Ende hakenförmig gekrümmt ausgebildet ist, durch die Statorbohrung 117 bewegt und am Haltelarm 2' entsprechend verschwenkt wird, so daß nicht der Haltearm 2' auch durch die Statorbohrung 117 hindurchbewegt werden muß, was häufig dann Schwierigkeiten bereitet, wenn es sich um Statorpakete mit kleinen Abmessungen für Kleinmotoren handelt, deren Statorbohrung 117 relativ klein bemessen ist, so daß der Haltearm 2' in den meisten Fällen überhaupt nicht durch paßt.

Selbstverständlich ist die Erfindung nicht auf die voranstehend im Zusammenhang mit dem Verfahren, der Endscheibe 10 und des Drahtführers 1; 1' erläuterten Einzelheiten beschränkt, sondern selbstverständlich sind hiervon zahlreiche Abänderungen und Modifikationen sowohl hinsichtlich der Einzelheiten als auch der Gesamtkombination im Rahmen der Ansprüche 1 bis 20 möglich. Insbesondere können die Endscheiben 10 anders als dargestellt ausgelegt und ausgebildet sein. Gleiches gilt auch für den Drahtführer 1, 1' sowie dessen Einzelheiten. Vielmehr ist es bei der Erfindung wesentlich, daß zum Bewickeln eines Statorpakets 100 mit einem Wickelmuster von >1, d.h. unter Überspringen jeweils einer benachbarten Statornut 101 bis 116 stirnseitig an dem Statorpaket 100 Endscheiben 10 vorgesehen werden, welche einen Wickeldrahtaufnahmeraum 13 derart bilden, daß der Wickeldraht 30 axial und radial außerhalb der Statornuten 101 bis 116 von den jeweiligen Nutenden zu den Nutanfängen derart verlegt werden kann, daß die hierbei übersprungene, dazwischenliegende Statornut 101 bis 116 nicht verdeckt wird, sondern weitgehend freigehalten wird, und daher bei der anschließenden Wickelfolge nach Vorgabe des entsprechenden Wikkelmusters bewickelt werden kann. Ferner erfolgt die Bewicklung vollautomatisch vorzugsweise unter Einsatz einer entsprechend programmierbaren oder lernend programmierbaren Steuerung, wobei der Drahtführer 1, 1' nicht nur eine translatorische Linearbewegung ausführen kann, sondern auch eine um seine Längsachse senkrechte Drehachse 4, 4' verdrehbar und verschwenkbar ist, um den Wickeldraht 30 jeweils in die Wickeldrahtaufnahmeräume 13 der Endscheiben 10 einlegen zu können. Zugleich können die Bewegungsabläufe selbtverständlich überlagert werden, was im übrigen auch für die einzeln gegliederten Verfahrensschritte a) bis h) bzw. a') bis h') gilt, so daß man dank einer mehrachsigen Verfahrbewegung und hierdurch erhaltenen überlagerten Gesamtbewegungen von Statorpaket 100 und Drahtführer 1, 1' frei wählbare und beliebige Wickelmuster mit einem Wickelschritt von >1 erstellen kann.

### BEZUGSZEICHENLISTE

- 1: Drahtführer insgesamt
- 2: Haltearm
- 3: Drehlagerung
- 4: Drehachse
- 5: Drehantriebseinrichtung insgesamt
- 6: Ketten- oder Riementrieb
- 7: Ritzel
- 8: Blockierzylinder
- 10: Endscheibe insgesamt
- 11: Umfangsrandflansch
- 12: Rückhaltefinger
- 13: Wickeldrahtaufnahmeraum
- 14: Boden
- 15: Kontaktierstelle
- 16: Aufnahmeöffnung
- 17: Pin
- 18: Isolierkragen
- 19: Indexiernase
- 30: Wickeldraht
- 40: Wicklung
- 100: Statorpaket insgesamt
- 101 - 116: Statornuten
- 117: Statorbohrung
- 201 - 215: Pole
d = Abstand in Fig. 6 Wicklungen I-IV in Fig. 7

### Fig. 8 bis 11

- 1': Drahtführer insgesamt
- 2': Haltearm
- 3': Drehlagerung
- 4': Drehachse
- 5': Drehantriebseinrichtung insgesamt
- 6': Ketten- oder Riementrieb
- 8': Blockierzylinder

## Patentansprüche

1. Verfahren zum maschinellen Bewickeln eines mit Statornuten (101 bis 116) zwischen Polen (201 bis 215) und einer Statorbohrung (117) versehenen Statorpakets (100) auf einer Drehaufnahme zum Drehbewegen des Statorpakets um seine Achse mittels eines Drahtführers (1), bei welchem zum Bewickeln des Statorpakets (100) mit einem beliebigen Wickelmuster mit einem Wickelschritt von größer 1 (>1), d.h. unter Überspringen von wenigstens einer unmittelbar benachbarten Statornut (101 bis 116) auf beiden Stirnseiten des Statorpakets (100) je eine Endscheibe (10) aus elektrisch isolierendem Material angebracht wird, welche einen radial und axial außerhalb der Statornuten (101 bis 116) liegenden und in Umfangsrichtung verlaufenden Wickeldrahtaufnahmeraum (13) unter wenigstens teilweiser Freihaltung wenigstens einer direkt benachbarten Statornut (101 bis 116) bildet und zwischen jeweils zwei benachbarten Statornuten (101 bis 116) einen radial vorspringenden Rückhaltefinger (12) hat, der Wickeldraht (30) unter Spannung mittels des Drahtführers (1) derart verlegt wird, daß der Drahtführer (1) mittels eines Haltearms (2) in wenigstens zwei gesteuerten Achsen axial und radial bezogen auf das Statorpaket (100) bewegt und durch die Statorbohrung (117) hindurch zusammen mit dem Haltearm (2) verfahren wird, der Drahtführer (1) um eine zu seiner Längsachse senkrechte Achse (4) zum Verlegen des Wickeldrahts (30) in den Wickeldrahtaufnahmeraum (13) der jeweiligen Endscheibe (10) gedreht wird, und das Statorpaket (100) zur nächsten zu bewickelnden Statornut (101 bis 116) durch die Drehaufnahme mit entsprechendem Schaltschritt gedreht wird, und der Wickeldraht (30) durch den zugeordneten Rückhaltefinger (12) der Endscheibe (10) geführt wird.

2. Verfahren nach Anspruch 1, **dadurch gekennzeichnet**, daß durch den Wickeldrahtaufnahmeraum (13) der Endscheibe (10) wenigstens die Hälfte des Querschnitts der Statornut (101 bis 116) freigehalten wird.

3. Verfahren nach Anspruch 1 oder 2, gekennzeichnet durch folgende Schritte:
a) Anlegen des Wickeldrahts (30) an einer Kontaktierstelle (15) auf der vom Statorpaket (100) abgewandten Seite einer der Endscheiben (10) durch Ausführen einer Bewegung des Drahtführers (1);
b) Vorbeiführen des Wickeldrahts (30) an dem Rückhaltefinger (12) der Endscheibe (10) auf einer von der Kontaktierstelle (15) abgewandten Seite;
c) Durchziehen des Wickeldrahts (30) durch eine der Statornuten (101 bis 116) bis zum axial gegenüberliegenden Ende des Statorpakets (100) mit aufgebrachter Endscheibe (10) und geringfügig darüber hinaus, bei dem der Drahtführer (1) mit dem Haltearm (2) durch die Statorbohrung (117) axial verfahren wird, und Drehen des Drahtführers (1) um seine zur Längsachse senkrechte Achse (4) zum Einlegen des Wickeldrahts (30) in den Wickeldrahtaufnahmeraum (13) der Endscheibe (10) unter Vorbeigang an der dem Statorpaket (100) zugewandten Seite des Rückhaltefingers (12);
d) Verdrehen des Statorpakets (100) mit Endscheiben (10) um seine Achse zur nach dem Wickelmuster nächsten, zu bewickelnden Statornut (101 bis 116);
e) Zurückfahren des Drahtführers (1) unter Ausführung einer axialen Bewegung des Haltearms (2) und des Drahtführers (1) durch die Statorbohrung (117) zum Verlegen des Wickeldrahts (30) in der Statornut (101 bis 116) bis zum axial gegenüberliegenden Ende des Statorpakets (110) und der angebrachten Endscheibe (10) und geringfügig darüber hinaus, und Drehen des Drahtführers (1) um seine zur Längsachse senkrechte Achse (4) zum Einlegen des Wickeldrahts (30) in den Wickeldrahtaufnahmeraum (13) der Endscheibe (10) unter Vorbeigang an der dem Statorpaket (100) zugewandten Seite des Rückhaltefingers (12);
f) Verdrehen des Statorpakets (100) um seine Achse zur nächsten zugeordneten, zu bewickelnden Statornut (101 bis 116);
g) Wiederholen der Schritte c) bis f) bis zur Fertigstellung des gewünschten Wickelmusters auf dem Statorpaket (100); und
h) Anlegen des Wickeldrahtendes an der Endkontaktierstelle (15) an der Endscheibe (10) durch Bewegen des Drahtführers (1) zum Verschalten des fertig bewickelten Statorpakets (100).

4. Verfahren zum maschinellen Bewickeln eines mit Statornuten (101 bis 116) zwischen Polen (201 bis 215) und einer Statorbohrung (117) versehenen Statorpakets (100) auf einer Drehaufnahme zum Drehbewegen des Statorpakets um seine Achse mittels eines Drahtführers (1'), welches folgendes aufweist:
- zum Bewickeln des Statorpakets (100) mit einem beliebigen Wickelmuster mit einem Wickelschritt von größer 1 (>1), d.h. unter Überspringen von wenigstens einer unmittelbar benachbarten Statornut (101 bis 116) wird auf beiden Stirnseiten des Statorpakets (100) je eine Endscheibe (10) aus elektrisch isolierendem Material angebracht, welche einen radial und axial außerhalb der Statornuten (101 bis 116) liegenden und in Umfangsrichtung verlaufenden Wickeldrahtaufnahmeraum (13) unter wenigstens teilweiser Freihaltung wenigstens einer direkt benachbarten Statornut (101 bis 116) bildet und zwischen jeweils zwei benachbarten Statornuten (101 bis 116) einen radial vorspringenden Rückhaltefinger (12) hat,
- der Wickeldraht (30) wird unter Spannung mittels des Drahtführers (1'), welcher an seinem freien Ende hakenförmig gekrümmt ausgebildet ist, derart verlegt, daß der Drahtführer (1') mittels eines Haltearms (2') in wenigstens zwei gesteuerten Achsen axial und radial bezogen auf das Statorpaket (100) bewegt wird,
- der Drahtführer (1') um eine zu seiner Längsachse senkrechte Achse (4') zum Verlegen des Wickeldrahts (30) in den Wickeldrahtaufnahmeraum (13) der jeweiligen Endscheibe (10) gedreht wird, und
- das Statorpaket (100) zur nächsten zu bewickelnden Statornut (101 bis 116) durch die Drehaufnahme mit entsprechendem Schaltschritt gedreht wird, und der Wickeldraht (30) durch den zugeordneten Rückhaltefinger (12) der Endscheibe (10) geführt wird.

5. Verfahren nach Anspruch 4, **dadurch gekennzeichnet**, daß durch den Wickeldrahtaufnahmeraum (13) der Endscheibe (10) wenigstens die Hälfte des Querschnitts der Statornut (101 bis 116) freigehalten wird.

6. Verfahren nach Anspruch 4 oder 5, **gekennzeichnet durch** folgende Schritte:
a') Anlegen des Wickeldrahts (30) an einer Kontaktierstelle (15) auf der vom Statorpaket (100) abgewandten Seite einer der Endscheiben (10) durch Ausführen einer Bewegung des Drahtführers (1');
b') Vorbeiführen des Wickeldrahts (30) an dem Rückhaltefinger (12) der Endscheibe (10) auf einer von der Kontaktierstelle (15) abgewandten Seite;
c') Durchziehen des Wickeldrahts (30) durch eine der Statornuten (101 bis 116) bis zum axial gegenüberliegenden Ende des Statorpakets (100) mit aufgebrachter Endscheibe (10) und geringfügig darüber hinaus, bei dem der Drahtführer (1') durch die Statorbohrung (117) axial bewegt wird und der Drahtführer (1') um seine zur Längsachse senkrechte Achse (4') zum Einlegen des Wickeldrahts (30) in den Wickeldrahtaufnahmeraum (13) der Endscheibe (10) unter Vorbeigang an der dem Statorpaket (100) zugewandten Seite des Rückhaltefingers (12) gedreht wird;
d') Verdrehen des Statorpakets (100) mit Endscheiben (10) um seine Achse zur nach dem Wickelmuster nächsten, zu bewickelnden Statornut (101 bis 116);
e' ) Zurückfahren des Drahtführers (1') unter Ausführung einer axialen Bewegung zum Verlegen des Wickeldrahts (30) in der Statornut (101 bis 116) bis zum axial gegenüberliegenden Ende des Statorpakets (110) und der angebrachten Endscheibe (10) und geringfügig darüber hinaus, und Drehen des Drahtführers (1') um seine zur Längsachse senkrechte Achse (4') zum Einlegen des Wickeldrahts (30) in den Wickeldrahtaufnahmeraum (13) der Endscheibe (10) unter Vorbeigang an der dem Statorpaket (100) zugewandten Seite des Rückhaltefingers (12);
f') Verdrehen des Statorpakets (100) um seine Achse zur nächsten zugeordneten, zu bewickelnden Statornut (101 bis 116);
g') Wiederholen der Schritte c') bis f') bis zur Fertigstellung des gewünschten Wickelmusters auf dem Statorpaket (100); und
h') Anlegen des Wickeldrahtendes an der Endkontaktierstelle (15) an der Endscheibe (10) durch Bewegen des Drahtführers (1') zum Verschalten des fertig bewickelten Statorpakets (100).

7. Drahtführer zum maschinellen Bewickeln eines Statornuten (101 bis 116) und eine Statorbohrung (117) aufweisenden Statorpakets (100) für elektrische Maschinen oder Elektromotoren mit einem beliebigen Wickelmuster mit einem Wickelschritt >1, d.h. unter Überspringen von wenigstens einer unmittelbar benachbarten Statornut (101 bis 116) zur Durchführung des Verfahrens nach einem der Ansprüche 1 bis 3, wobei der Drahtführer (1) mittels eines Haltearms (2) in zwei oder drei Achsen axial und radial bezogen auf das Statorpaket (100) steuerbar angetrieben unter Durchgang durch die Statorbohrung (117) bewegbar ist, und der Drahtführer (1) an einem Ende des Haltearms (2) um eine zu seiner Längsachse senkrechte Achse (4) drehbar gelagert ist.

8. Drahtführer zum maschinellen Bewickeln eines Statornuten (101 bis 116) und eine Statorbohrung (117) aufweisenden Statorpakets (100) für elektrische Maschinen oder Elektromotoren mit einem beliebigen Wickelmuster mit einem Wickelschritt >1, d.h. unter Überspringen von wenigstens einer unmittelbar benachbarten Statornut (101 bis 116) zur Durchführung des Verfahrens nach einem der Ansprüche 4 bis 6, wobei der Drahtführer (1') mittels eines Haltearms (2') in zwei oder drei Achsen axial und radial bezogen auf das Statorpaket (100) steuerbar angetrieben bewegbar ist, der Drahtführer (1') an einem Ende des Haltearms (2') um eine zu seiner Längsachse senkrechte Achse (4') drehbar gelagert ist und das freie Ende des Drahtführers (1') hakenförmig gekrümmt ausgebildet ist.

9. Drahtführer nach Anspruch 7 oder 8, **dadurch gekennzeichnet**, daß eine Drehantriebseinrichtung (5; 5') für die Drehbewegung des Drahtführers (1; 1') am Haltearm (2; 2') angebracht ist.

10. Drahtführer nach Anspruch 9, **dadurch gekennzeichnet**, daß die Drehantriebseinrichtung (5; 5') einen Riemen- oder Kettentrieb (6, 7; 6', 7') oder ein Schubgestänge aufweist.

11. Drahtführer nach einem der Ansprüche 7 bis 10, **dadurch gekennzeichnet**, daß der Drahtführer (1; 1') mittels eines Blockierzylinders (8; 8') in seiner Lage arretierbar ist.

12. Drahtführer nach einem der Ansprüche 7 bis 11, **dadurch gekennzeichnet**, daß der Drahtführer (1; 1') an einem Ende des Haltearms (2; 2') angeordnet und gelagert ist.

13. Drahtführer nach Anspruch 12, **dadurch gekennzeichnet**, daß die Drehantriebseinrichtung (5, 5') für den Drahtführer (1; 1') am zur Lagerung des Drahtführers (1; 1') gegenüberliegenden Ende des Haltearms (2; 2') vorgesehen ist.

14. Endscheibe zum maschinellen Bewickeln eines mit Statornuten (101 bis 116) und einer Statorbohrung (117) versehenen Statorpakets (100) für elektrische Maschinen oder Elektromotoren mit einem beliebigen Wickelmuster mit einem Wickelschritt >1, d.h. unter Überspringen von wenigstens einer unmittelbar benachbarten Statornut (101 bis 106) zur Durchführung des Verfahrens nach einem der Ansprüche 1 bis 6, wobei die Endscheibe (10) aus einem elektrisch isolierenden Material hergestellt ist und folgendes aufweist:
- einen die Stirnfläche des Statorpakets (100) abdeckenden und die zu erstellende Wicklung (40) isolierenden Umfangsrandflansch (11),
- je einen zwischen jeweils zwei benachbarten Statornuten (101 bis 116) angeordneten und radial verlaufenden Rückhaltefinger (12), und
- einen radial und axial außerhalb der Statornuten (101 bis 116) liegenden Wickeldrahtaufnahmeraum (13), welcher zwischen dem Umfangsrandflansch (11) und den Rückhaltefingern (12) gebildet wird und eine derartige Tiefe hat, daß die Statornuten (101 bis 116) wenigstens teilweise freigehalten sind.

15. Endscheibe nach Anspruch 14, **gekennzeichnet durch** einen axial verlaufenden und wenigstens teilweise in die jeweilige Statornut (101 bis 116) ragenden Kragen (18) als Abstandshalter und zur Isolierung gegenüber dem Statorpaket (100).

16. Endscheibe nach Anspruch 14 oder 15, **dadurch gekennzeichnet**, daß wenigstens eine Endscheibe (10) eine Kontaktierstelle (15) zur Verschaltung hat.

17. Endscheibe nach Anspruch 16, **dadurch gekennzeichnet**, daß die Kontaktierstelle (15) von einem Pin (17), Terminals oder dergleichen gebildet wird.

18. Endscheibe nach einem der Ansprüche 15 bis 17, **dadurch gekennzeichnet**, daß der Kragen (18) zur Positionierung und Arretierung der Endscheibe (10) in die zugeordneten Statornuten (101 bis 116) einrastet.

19. Endscheibe nach einem der Ansprüche 14 bis 18, **dadurch gekennzeichnet**, daß die Endscheibe (10) aus Kunststoff hergestellt ist.

20. Endscheibe nach einem der Ansprüche 14 bis 19, **dadurch gekennzeichnet**, daß an dem die Stirnfläche des Statorpakets (100) abdeckenden Umfangsrandflansch (11) zur Bestimmung der Ausgangsposition für die Steuerung der Wickelvorgänge wenigstens eine radial vorspringende Indexiernase (19) vorgesehen ist, welche nach der fertiggestellten Bewicklung des Statorpakets (100) abgetrennt wird.

## Claims

1. Process for machine winding a stator stack (100) provided with stator grooves (101 to 116) between poles (201 to 215) and a stator bore (117) on a rotary receiver for rotary movement of the stator stack about its axis by means of a wire guide (1), in which an end plate (10) made from electrically insulating material, which forms a winding wire receiver space (13) extending peripherally and lying radially and axially outside the stator grooves (101 to 116) while keeping at least one immediately neighbouring stator groove (101 to 116) at least partly free and has a radially projecting restraining finger (12) between in each case two neighbouring stator grooves (101 to 116), is attached to both end-faces of the stator stack (100) to wind the stator stack (100) with any winding pattern having a winding step greater than 1 (>1), that is while omitting at least one immediately neighbouring stator groove (101 to 116), the winding wire (30) is laid under tension by means of the wire guide (1) such that the wire guide (1) moves in at least two controlled axes by means of a retaining arm (2) axially and radially with respect to the stator stack (100) and is driven through the stator bore (117) together with the retaining arm (2), the wire guide (1) is rotated about an axis (4) vertical to its longitudinal axis to lay the winding wire (30) in the winding wire receiver space (13) of the particular end plate (10), and the stator stack (100) is rotated to the next stator groove (101 to 116) to be wound by the rotary receiver with corresponding control step, and the winding wire (30) is guided through the assigned restraining finger (12) of the end plate (10).

2. Process according to claim 1, characterised in that at least half the cross-section of the stator groove (101 to 116) is kept free by the winding wire receiver space (13) of the end plate (10).

3. Process according to claim 1 or 2, characterised by the following steps:
a) applying the winding wire (30) to a contacting point (15) on the side of one of the end plates (10) facing away from the stator stack (100) by executing a movement of the wire guide (1);
b) conducting the winding wire (30) past the restraining finger (12) of the end plate (10) on a side facing away from the contacting point (15);
c) drawing the winding wire (30) through one of the stator grooves (101 to 116) as far as the axially opposite end of the stator stack (100) with attached end plate (10) and slightly beyond, in which the wire guide (1) with the retaining arm (2) is driven axially through the stator bore (117), and rotating the wire guide (1) about its axis (4) vertical to the longitudinal axis for inserting the winding wire (30) in the winding wire receiver space (13) of end plate (10) while conducting past the side of the restraining finger (12) facing the stator stack (100);
d) rotating the stator stack (100) with end plates (10) about its axis to the next stator groove (101 to 116) to be wound according to the winding pattern;
e) returning the wire guide (1) through stator bore (117) while executing an axial movement of the retaining arm (2) and the wire guide (1) to lay the winding wire (30) in the stator groove (101 to 116) as far as the axially opposite end of the stator stack (110) and the attached end plate (10) and slightly beyond, and rotating the wire guide (1) about its axis (4) vertical to the longitudinal axis for inserting the winding wire (30) in the winding wire receiver space (13) of the end plate (10) while conducting past the side of the restraining finger (12) facing the stator stack (100);
f) rotating the stator stack (100) about its axis to the next assigned stator groove (101 to 116) to be wound;
g) repeating steps c) to f) to the final position of the required winding pattern on the stator stack (100); and
h) placing the winding wire end on the end contacting point (15) on the end plate (10) by moving the wire guide (1) to connect the completely wound stator stack (100).

4. Process for machine winding a stator stack (100) provided with stator grooves (101 to 116) between poles (201 to 215) and a stator bore (117) on a rotary receiver for rotary movement of the stator stack about its axis by means of a wire guide (1'), which has the following:
- an end plate (10) made from electrically insulating material, which forms a winding wire receiver space (13) extending peripherally and lying radially and axially outside the stator grooves (101 to 116) while keeping at least one immediately neighbouring stator groove (101 to 116) at least partly free and has a radially projecting restraining finger (12) between in each case two neighbouring stator grooves (101 to 116), is attached to both end-faces of the stator stack (100) to wind the stator stack (100) with any winding pattern having a winding step greater than 1 (>1), that is while omitting at least one immediately neighbouring stator groove (101 to 116),
- the winding wire (30) is laid under tension by means of the wire guide (1'), which is designed to be bent like a hook at its free end, such that the wire guide (1') is moved in at least two controlled axes by means of a retaining arm (2') axially and radially with respect to the stator stack (100),
- the wire guide (1') is rotated about an axis (4') vertical to its longitudinal axis to lay the winding wire (30) in the winding wire receiver space (13) of the particular end plate (10), and
- the stator stack (100) is rotated to the next stator groove (101 to 116) to be wound by the rotary receiver with corresponding control step, and the winding wire (30) is guided through the assigned restraining finger (12) of the end plate (10).

5. Process according to claim 4, characterised in that at least half of the cross-section of the stator groove (101 to 116) is kept free by the winding wire receiver space (13) of the end plate (10).

6. Process according to claim 4 or 5, characterised by the following steps:
a') applying the winding wire (30) to a contacting point (15) on the side of one of the end plates (10) facing away from the stator stack (100) by executing a movement of the wire guide (1');
b') conducting the winding wire (30) past the restraining finger (12) of the end plate (10) on a side facing away from the contacting point (15);
c') drawing the winding wire (30) through one of the stator grooves (101 to 116) as far as the axially opposite end of the stator stack (100) with attached end plate (10) and slightly beyond, in which the wire guide (1') is moved axially through the stator bore (117), and the wire guide (1') is rotated about its axis (4') vertical to the longitudinal axis for inserting the winding wire (30) in the winding wire receiver space (13) of the end plate (10) while conducting past the side of the restraining finger (12) facing the stator stack (100);
d') rotating the stator stack (100) with end plates (10) about its axis to the next stator groove (101 to 116) -to be wound according to the winding pattern;
e') returning the wire guide (1') while executing an axial movement to lay the winding wire (30) in the stator groove (101 to 116) as far as the axially opposite end of the stator stack (110) and the attached end plate (10) and slightly beyond, and rotating the wire guide (1') about its axis (4') vertical to the longitudinal axis for inserting the winding wire (30) in the winding wire receiver space (13) of the end plate (10) while conducting past the side of the restraining finger (12) facing the stator stack (100);
f') rotating the stator stack (100) about its axis to the next assigned stator groove (101 to 116) to be wound;
g') repeating steps c') to f') to the final position of the required winding pattern on the stator stack (100); and
h') placing the winding wire end on the end contacting point (15) on the end plate (10) by moving the wire guide (1') to connect the completely wound stator stack (100).

7. Wire guide for machine winding a stator stack (100) having stator grooves (101 to 116) and a stator bore (117) for electric machines or electromotors with any winding pattern having a winding step >1, that is while omitting at least one immediately neighbouring stator groove (101 to 116) to carry out the process according to one of claims 1 to 3, wherein the wire guide (1) can be moved by means of a retaining arm (2) in two or three axes axially and radially with respect to the stator stack (100) driven controllably while passing through the stator bore (117), and the wire guide (1) is mounted rotatably on one end of the retaining arm (2) about an axis (4) vertical to its longitudinal axis.

8. Wire guide for machine winding a stator stack (100) having stator grooves (101 to 116) and a stator bore (117) for electric machines or electromotors with any winding pattern having a winding step >1, that is while omitting at least one immediately neighbouring stator groove (101 to 116) to carry out the process according to one of claims 4 to 6, wherein the wire guide (1') can be moved driven controllably by means of a retaining arm (2') in two or three axes axially and radially with respect to the stator stack (100), the wire guide (1') is mounted rotatably on one end of the retaining arm (2') about an axis (4') vertical to its longitudinal axis and the free end of the wire guide (1') is designed to be bent like a hook.

9. Wire guide according to claim 7 or 8, characterised in that a rotary drive device (5; 5') is attached to the retaining arm (2; 2') for the rotary movement of the wire guide (1; 1').

10. Wire guide according to claim 9, characterised in that the rotary drive device (5; 5') has a belt drive or chain drive (6, 7; 6', 7') or a driving rod.

11. Wire guide according to one of claims 7 to 10, characterised in that the wire guide (1; 1') can be locked in its position by means of a blocking cylinder (8; 8').

12. Wire guide according to one of claims 7 to 11, characterised in that the wire guide (1; 1') is arranged and mounted on one end of the retaining arm (2; 2').

13. Wire guide according to claim 12, characterised in that the rotary drive device (5, 5') for the wire guide (1; 1') is provided on the opposite end of the retaining arm (2; 2') for mounting the wire guide (1; 1').

14. End plate for machine winding a stator stack (100) provided with stator grooves (101 to 116) and a stator bore (117) for electric machines or electromotors with any winding pattern having a winding step >1, that is while omitting at least one immediately neighbouring stator groove (101 to 106) to carry out the process according to one of claims 1 to 6, wherein the end plate (10) is produced from an electrically insulating material and has the following:
- a peripheral edge flange (11) insulating the winding (40) to be produced and covering the end-face of the stator stack (100),
- in each case a radially extending restraining finger (12) arranged in each case between two neighbouring stator grooves (101 to 116), and
- a winding wire receiver space (13) lying radially and axially outside the stator grooves (101 to 116) and which is formed between the peripheral edge flange (11) and the restraining fingers (12) and has a depth such that the stator grooves (101 to 116) are at least partly kept free.

15. End plate according to claim 14, characterised by an axially extending collar (18) projecting at least partly into the particular stator groove (101 to 116) as a distancing piece and for insulation with respect to the stator stack (100).

16. End plate according to claim 14 or 15, characterised in that at least one end plate (10) has a contacting point (15) for connection.

17. End plate according to claim 16, characterised in that the contacting point (15) is formed by a pin (17), terminals or the like.

18. End plate according to one of claims 15 to 17, characterised in that the collar (18) engages in the assigned stator grooves (101 to 116) to position and lock the end plate (10).

19. End plate according to one of claims 14 to 18, characterised in that the end plate (10) is produced from plastic.

20. End plate according to one of claims 14 to 19, characterised in that at least one radially projecting indexing catch (19), which is separated after completing winding of the stator stack (100), is provided on the peripheral edge flange (11) covering the end-face of the stator stack (100) to determine the starting position for the control of the winding processes.

## Revendications

1. Procédé de bobinage mécanique d'un paquet de stator (100) pourvu d'encoches de stator (101 à 116) entre des pôles (201 à 215) et d'un perçage de stator (117), sur un logement de tourillonnement, pour le déplacement rotatif du paquet de stator autour de son axe au moyen d'un guide-fil (1), procédé dans lequel, pour bobiner le paquet de stator (100) avec un modèle de bobinage quelconque, ayant un pas de bobinage supérieur à 1 (> 1), c'est-à-dire en sautant au moins une encoche de stator (101 à 116) directement voisine, on monte sur chacune des deux faces frontales du paquet de stator (100), un disque d'extrémité (10) en matériau isolant de l'électricité et formant un espace de logement de fil de bobinage (13) placé radialement et axialement à l'extérieur des encoches de stator (101 à 116) et courant en direction périphérique, en laissant libre, au moins partiellement, au moins une encoche de stator (101 à 116) directement voisine et ayant un doigt de retenue (12) faisant saillie radialement, entre deux encoches de stator (101 à 116) voisines, le fil de bobinage (30) étant posé sous tension au moyen du guide-fil (1) de manière que le guide-fil d'au moins un bras de maintien (2) se déplace selon au moins deux axes commandés, axialement et radialement par rapport au paquet de stator (100) et soit déplacé à travers le perçage stator (117) conjointement avec le bras de maintien (2), le guide-fil (1) étant à tourner autour d'un axe (4) perpendiculaire à son axe longitudinal, pour effectuer la pose du fil de bobinage (30) dans l'espace de logement (13) du fil de bobinage du disque d'extrémité (10) respectif, et le paquet de stator (100) étant à tourner, avec un pas de manoeuvre correspondant, vers l'encoche de stator (101 à 116) suivante à garnir d'un bobinage, dans le logement de tourillonnement, et le fil de bobinage (30) étant guidé au moyen du doigt de retenue (12) associé du disque d'extrémité (10).

2. Procédé selon la revendication 1, caractérisé en ce qu'au moins la moitié de la section transversale de l'encoche de stator (101 à 116) est laissée libre dans l'espace de logement (13) du fil de bobinage du disque d'extrémité (10).

3. Procédé selon la revendication 1 ou 2, caractérisé par les étapes ci-après :
a) application du fil de bobinage (30) sur un point de contact (15), du côté opposé au paquet de stator (100), de l'un des disques d'extrémité (100), par un déplacement du guide-fil (1);
b) passage du fil de bobinage (30) sur le doigt de retenue (12) du disque d'extrémité (10), du côté opposé au point de contact (15);
c) passage avec traction du fil de bobinage (30) dans l'une des encoches de stator (101 à 116), jusqu'à l'extrémité axialement opposée du paquet de stator (100), le disque d'extrémité (10) étant appliqué et ressortant légèrement, étape lors de laquelle le guide-fil (1) est déplacé axialement avec le bras de maintien (2) dans le perçage de stator (117), et rotation du guide-fil (1) autour de son axe (4) perpendiculaire à l'axe longitudinal, pour introduire le fil de bobinage (30) dans l'espace de logement (13) de fil de bobinage du disque d'extrémité (10) avec passage sur la face, tournée vers le paquet de stator (100), du doigt de retenue (12);
d) rotation du paquet de stator (100) avec les disques d'extrémité (10) autour de son axe, vers l'encoche de stator (101 à 116) venant ensuite selon le modèle de bobinage et qui doit être bobinée;
e) rétraction du guide-fil (10) en effectuant un déplacement axial du bras de maintien (2) et du guide fil (1), en passant dans le perçage de stator (117) pour poser le fil de bobinage dans l'encoche de stator (101 à 116) jusqu'à l'extrémité axialement opposée du paquet de stator (110) et du disque d'extrémité (10) monté et ressortant légèrement, et rotation du guide-fil (1) autour de son axe (4) perpendiculaire à l'axe longitudinal pour introduire le fil de bobinage (30) dans l'espace de logement (13) du fil de bobinage du disque d'extrémité (10) avec passage sur la face, tournée vers le paquet de stator (100), du doigt de retenue (12);
f) rotation du paquet de stator (100) autour de son axe vers l'encoche de stator (101 à 116) associée venant ensuite et devant être bobinée;
g) répétition des étapes (c) à (f) jusqu'à ce que le motif de bobinage souhaité sur le paquet de stator (100) soit terminé;
h) application de l'extrémité de fil de bobinage sur le point de contact final (15) sur le disque d'extrémité (10), par déplacement du guide-fil (1) pour permettre le branchement du paquet de stator (100) dont le bobinage est terminé.

4. Procédé de bobinage mécanique d'un paquet de stator (100) pourvu d'encoches de stator (101 à 116) entre des pôles (201 à 215) et pourvu d'un perçage de stator (117), sur un logement de tourillonnement, pour assurer le déplacement du paquet de stator autour de son axe, au moyen d'un guide-fil (1'), procédé présentant les étapes ci-après:
- pour bobiner le paquet de stator (100) avec un motif de bobinage quelconque, avec un pas de bobinage supérieur à 1 (> 1), c'est-à-dire en sautant au moins une encoche de stator (101 à 116) directement voisine, on applique sur chacune des deux faces frontales du paquet de stator (100) un disque d'extrémité (10) en matériau isolant de l'électricité et constituant un espace de logement (13) de fil de bobinage situé radialement et axialement à l'extérieur des encoches de stator (101 à 116) et s'étendant en direction périphérique, en laissant libre au moins partiellement au moins une encoche de stator (101 à 116) directement voisine et ayant un doigt de retenue (12), faisant saillie radialement entre deux encoches de stator (101 à 116) voisines,
- le fil métallique de bobinage (30) est posé sous tension au moyen du guide-fil (1') qui est réalisé incurvé en crochet à son extrémité libre de manière que le guide-fil (1') soit déplacé axialement et radialement par rapport au paquet de stator (100), dans au moins deux axes commandés, au moyen d'un bras de maintien (2'),
- le guide-fil (1') est tourné autour d'un axe (4') perpendiculaire à son axe longitudinal, pour poser le fil de bobinage (30), dans l'espace de logement (13) pour fil de bobinage du disque d'extrémité (10) respectif, et
- le paquet de stator (100) est tourné vers l'encoche de stator (101 à 116) suivante à bobiner, de la valeur d'un pas de branchement correspondant, dans le logement de tourillonnement, et le fil de bobinage (30) est guidé au moyen du doigt de retenue (12) associé du disque d'extrémité (10).

5. Procédé selon la revendication 4, caractérisé en ce qu'au moins la moitié de la section transversale de l'encoche de stator (101 à 116) est laissée libre dans l'espace de logement (13) du fil de bobinage du disque d'extrémité (10).

6. Procédé selon la revendication 4 ou 5, caractérisé par les étapes ci-après:
a') application du fil de bobinage (30) sur un point de contact (15), du côté opposé au paquet de stator (100), de l'un des disques d'extrémité (100), par un déplacement du guide-fil (1);
b') passage du fil de bobinage (30) sur le doigt de retenue (12) du disque d'extrémité (10), du côté opposé au point de contact (15);
c') passage avec traction du fil de bobinage (30) dans l'une des encoches de stator (101 à 116), jusqu'à l'extrémité axialement opposée du paquet de stator (100), le disque d'extrémité (10) étant appliqué et ressortant légèrement, étape lors de laquelle le guide-fil (1') est déplacé axialement avec le bras de maintien (2) dans le perçage de stator (117), et rotation du guide-fil (1) autour de son axe (4) perpendiculaire à l'axe longitudinal pour introduire le fil de bobinage (30) dans l'espace de logement (13) de fil de bobinage du disque d'extrémité (10) avec passage, sur la face tournée vers le paquet de stator (100), du doigt de retenue (12);
d') rotation du paquet de stator (100) avec les disques d'extrémité (10) autour de son axe, vers l'encoche de stator (101 à 116) venant ensuite selon le modèle de bobinage et qui doit être bobinée;
e') rétraction du guide-fil (1') en effectuant un déplacement axial pour poser le fil de bobinage dans l'encoche de stator (101 à 116) jusqu'à l'extrémité axialement opposée du paquet de stator (110) et du disque d'extrémité (10) monté et ressortant légèrement, et rotation du guide-fil (1') autour de son axe (4') perpendiculaire à l'axe longitudinal pour introduire le fil de bobinage (30) dans l'espace de logement (13) du fil de bobinage du disque d'extrémité (10) avec passage sur la face, tournée vers le paquet de stator (100), du doigt de retenue (12);
f') rotation du paquet de stator (100) autour de son axe vers l'encoche de stator (101 à 116) associée venant ensuite et devant être bobinée;
g') répétition des étapes (c') à (f') jusqu'à ce que le motif de bobinage souhaité sur le paquet de stator (100) soit terminé;
h) application de l'extrémité de fil de bobinage sur le point de contact final (15) sur le disque d'extrémité (10) par déplacement du guide-fil (1') pour permettre le branchement du paquet de stator (100) dont le bobinage est terminé.

7. Guide-fil pour le bobinage mécanique d'un paquet de stator (100) présentant une encoche (101 à 116) et un perçage de stator (117), pour des machines électriques ou des moteurs électriques, avec un motif de bobinage quelconque, ayant un pas de bobinage > 1, c'est-à-dire en sautant au moins une encoche de stator (101 à 116) directement voisine, pour mettre en oeuvre le procédé selon l'une des revendications 1 à 3, le guide-fil (1) étant déplaçable en traversant le perçage de stator (117), au moyen d'un bras de maintien (2) selon deux ou trois axes axialement et radialement par rapport au paquet de stator (100), en étant entraîné d'une façon soumise à une commande, et le guide-fil (1) étant monté tournant à une extrémité du bras de maintien (2), la rotation se faisant autour d'un axe (4) perpendiculaire à son axe longitudinal.

8. Guide-fil pour le bobinage mécanique d'un paquet de stator (100) présentant une encoche (101 à 116) et un perçage de stator (117), pour des machines électriques ou des moteurs électriques, avec un motif de bobinage quelconque, ayant un pas de bobinage > 1, c'est-à-dire en sautant au moins une encoche de stator (101 à 116) directement voisine, pour mettre en oeuvre le procédé selon l'une des revendications 4 à 6, le guide-fil (1') étant déplaçable de façon entraînée sous l'action d'une commande, au moyen d'un au moyen d'un bras de maintien (2') selon deux ou trois axes, axialement et radialement par rapport au paquet de stator (100), le guide-fil (1') étant monté tournant à une extrémité du bras de maintien (2'), la rotation se faisant autour d'un axe (4') perpendiculaire à son axe longitudinal, et l'extrémité libre du guide-fil (1') étant incurvée en crochet.

9. Guide-fil selon la revendication 7 ou 8, caractérisé en ce qu'un dispositif d'entraînement en rotation (5; 5') destiné au mouvement de rotation du guide-fil (1; 1') est monté sur le bras de maintien (2; 2').

10. Guide-fil selon la revendication 9, caractérisé en ce que le dispositif d'entraînement en rotation (5; 5') présente une transmission à courroie ou à chaînes (6, 7; 6', 7') ou un embiellage.

11. Guide-fil selon l'une des revendications 7 à 10, caractérisé en ce que le guide-fil (1; 1') peut être bloqué en position au moyen d'un vérin de blocage (8; 8').

12. Guide-fil selon l'une des revendications 7 à 11, caractérisé en ce que le guide-fil (1; 1') est disposé et monté tournant à une extrémité du bras de maintien (2; 2').

13. Guide-fil selon la revendication 12, caractérisé en ce qu'un dispositif d'entraînement en rotation (5; 5') du guide-fil (1; 1') est prévu sur l'extrémité, située à l'opposé du point de tourillonnement du guide-fil (1; 1') du bras de maintien (2; 2').

14. Disque d'extrémité pour le bobinage mécanique d'un paquet de stator (100) pourvu d'encoches de stator (101 à 116) entre des pôles (201 à 215) et d'un perçage de stator (117), pour des machines électriques ou des moteurs électriques avec un motif de bobinage quelconque, avec un pas de bobinage > 1, c'est-à-dire en sautant au moins une encoche de stator (101 à 106) directement voisine, pour mettre en oeuvre le procédé selon l'une des revendications 1 à 6, le disque d'extrémité (10) étant fabriqué en un matériau isolant de l'électricité et présentant les caractéristiques ci-après:
- une bride de bordure périphérique (11) recouvrant la face frontale du paquet de stator (100) et le bobinage (40) à constituer,
- des doigts de retenue (12) disposés respectivement entre deux encoches de stator (101 à 116) voisines et s'étendant radialement, et
- un espace de logement (13) pour fil de bobinage, disposé radialement et axialement à l'extérieur des encoches de stator (101 à 116) et étant constitué entre la bride de bordure périphérique (11) et les doigts de retenue (12) et ayant une profondeur telle que les encoches de stator (101 à 116) sont laissées au moins partiellement libres.

15. Disque d'extrémité selon la revendication 14, caractérisé par une collerette (18), s'étendant axialement et pénétrant au moins partiellement dans l'encoche de stator (101 à 116) respective et faisant office d'élément d'espacement et servant à l'isolation vis-à-vis du paquet de stator (100).

16. Disque d'extrémité selon la revendication 14 ou 15, caractérisé en ce qu'au moins un disque d'extrémité (10) a un point de contact (15) pour le câblage.

17. Disque d'extrémité selon la revendication 16, caractérisé en ce que le point de contact (15) est constitué par une broche (17), des bornes ou analogues.

18. Disque d'extrémité selon l'une des revendication 15 à 17, caractérisé en ce que la collerette (18) destinée au positionnement et au blocage du disque d'extrémité (10) s'encliquette dans les encoches de stator (101 à 116) associées.

19. Disque d'extrémité selon l'une des revendications 14 à 18, caractérisé en ce que le disque d'extrémité (10) est fabriqué en matière plastique.

20. Disque d'extrémité selon l'une des revendications 14 à 19, caractérisé en ce que, sur la bride de bordure périphérique (11) recouvrant la face frontale du paquet de stator (100), est prévu, pour fixer la position initiale de la commande des processus de bobinage, au moins un ergot d'indexation (19) faisant saillie radicalement et enlevé par découpage après achèvement du bobinage du paquet de rotor (100).
